# EUROPEAN PATENT APPLICATION

(11) **EP 4 460 084 A1**
(43) Date of publication of application: **06.11.2024**
(21) Application number: 23746340.1
(22) Date of filing: 20.01.2023
(51) Int. Cl.: H04W 36/00

(54) **COMMUNICATION METHOD, TERMINAL DEVICE, ACCESS NETWORK DEVICE, MEDIUM, AND CHIP**

(30) Priority: 28.01.2022 CN 202210107162; 21.07.2022 CN 202210869803
(71) Applicant: Huawei Technologies Co., Ltd., Shenzhen, Guangdong 518129 (CN)
(72) Inventor: WANG, Fanfan, Shenzhen, Guangdong 518129 (CN); GENG, Tingting, Shenzhen, Guangdong 518129 (CN)
(74) Representative: Körber, Martin Hans
(86) International application number: PCT/CN2023/073414
(87) International publication number: WO 2023/143462

(57) **Abstract**

A communication method, a terminal device, an access network device, a medium, and a chip are provided. The method includes: A terminal device obtains a cell change cause indication. The cell change cause indication indicates that a first cell change of the terminal device from a source cell to a first target cell or a second cell change of the terminal device from the first target cell to a second target cell is associated with a communication service of the terminal device. The first target cell uses a first radio access technology, and the source cell and the second target cell use a second radio access technology different from the first radio access technology. The method further includes: The terminal device sends the cell change cause indication to a second target access network device that provides the second target cell. In this way, the second target access network device may distinguish a communication service procedure from an inter-system ping-pong event, to avoid invalid and redundant optimization of an inter-system handover parameter that is triggered by a normal communication service procedure of the terminal device.

## Description

This application claims priorities to Chinese Patent Application No. 202210107162.X, filed with the China National Intellectual Property Administration on January 28, 2022 and entitled "COMMUNICATION METHOD, TERMINAL DEVICE, ACCESS NETWORK DEVICE, MEDIUM, AND CHIP", and to Chinese Patent Application No. 202210869803.5, filed with the China National Intellectual Property Administration on July 21, 2022 and entitled "COMMUNICATION METHOD, TERMINAL DEVICE, ACCESS NETWORK DEVICE, MEDIUM, AND CHIP", both of which are incorporated herein by reference in their entireties.

### TECHNICAL FIELD

This application relates to the communication field, and more specifically, to a communication method, a terminal device, an access network device, a computer-readable storage medium, and a chip.

### BACKGROUND

A handover of a terminal device between cells using different radio access technologies (Radio Access Technologies, RATs) may be referred to as an inter-system handover. Excessively frequent inter-system handovers may result in a waste of communication resources and poor communication robustness. Therefore, an inter-system handover parameter can be optimized by determining that the inter-system handover involves an inter-system ping-pong (Inter-system Ping-pong) event, so as to avoid excessively frequent inter-system handovers.

However, if the inter-system ping-pong event is improperly determined, excessive adjustment of the inter-system handover parameter may be caused, wasting system resources, and reducing communication efficiency.

### SUMMARY

This application provides a solution for communication.

A first aspect of this application provides a communication method implemented at a terminal device. The method includes: The terminal device obtains a cell change cause indication, where the cell change cause indication indicates that a first cell change of the terminal device from a source cell to a first target cell or a second cell change of the terminal device from the first target cell to a second target cell is associated with a communication service of the terminal device, the first target cell uses a first radio access technology (radio access technology, RAT), and the source cell and the second target cell use a second RAT different from the first RAT. The terminal device sends the cell change cause indication to a second target access network device to which the second target cell belongs. In this way, the second target access network device may distinguish a communication service procedure from an inter-system ping-pong event, to avoid invalid and redundant optimization of an inter-system handover parameter that is triggered by a normal communication service procedure of the terminal device.

In a possible implementation, the cell change cause indication includes: a cause of the change of the terminal device from the source cell or the first target cell; and/or a cause of the change of the terminal device to the first target cell or the second target cell.

In a possible implementation, the cell change cause indication indicates at least one of the following: The first cell change is associated with a voice fallback procedure of the terminal device from the source cell to the first target cell; or the second cell change is associated with a fast return procedure of the terminal device from the first target cell to the second target cell. In this way, invalid and redundant optimization of an inter-system handover parameter that is triggered by a voice service procedure of the terminal device is avoided.

In a possible implementation, the terminal device may further obtain at least one of the following: an indication of a type of a voice fallback procedure and an indication of a cell change execution mode. The indication of the type of the voice fallback procedure indicates that the voice fallback procedure is an evolved packet system fallback for voice procedure or an inter-radio access technology fallback for voice procedure. The cell change execution mode includes handover or redirection.

In a possible implementation, the voice fallback procedure includes a normal call voice fallback procedure or an emergency call voice fallback procedure, and the fast return procedure includes a normal call voice fast return procedure or an emergency call voice fast return procedure.

In a possible implementation, that the terminal device obtains a cell change cause indication includes: The terminal device obtains the cell change cause indication from a source access network device to which the source cell belongs.

In a possible implementation, that the terminal device obtains the cell change cause indication from a source access network device includes: The terminal device receives, from the source access network device, a first cell change command associated with the first cell change, where the first cell change command includes the cell change cause indication. The cell change cause indication is sent to the terminal device by using the first cell change command, so that additional signaling overheads can be avoided.

In a possible implementation, that the terminal device obtains a cell change cause indication includes: The terminal device obtains the cell change cause indication from a first target access network device to which the first target cell belongs.

In a possible implementation, that the terminal device obtains the cell change cause indication from a first target access network device includes: The terminal device receives, from the first target access network device, a second cell change command associated with the second cell change, where the second cell change command includes the cell change cause indication. The cell change cause indication is sent to the terminal device by using the second cell change command, so that additional signaling overheads can be avoided.

In a possible implementation, that the terminal device sends the cell change cause indication to a second target access network device includes: The terminal device sends a radio resource control reconfiguration complete message to the second target access network device in response to receiving, from a first target access network device to which the first target cell belongs, a second handover command associated with the second cell change, where the radio resource control reconfiguration complete message includes the cell change cause indication.

In a possible implementation, that the terminal device sends the cell change cause indication to a second target access network device includes: The terminal device receives a request for historical information of the terminal device from the second target access network device; and the terminal device sends the historical information to the second target access network device, where the historical information includes the cell change cause indication. The cell change cause indication is sent to the second target access network device together with the historical information, so that additional signaling overheads can be avoided.

In a possible implementation, the first RAT may be one of a 2nd generation (2nd Generation, 2G) RAT, a 3rd generation (3rd Generation, 3G) RAT, and a 4th generation (4th Generation, 4G) RAT, and the second RAT may be a 5th generation (5th Generation, 5G) RAT.

A second aspect of this application provides a communication method implemented at a first target access network device. The method includes: The first target access network device obtains a cell change cause indication, where the cell change cause indication indicates that a first cell change of a terminal device from a source cell to a first target cell of the first target access network device or a second cell change from the first target cell to a second target cell is associated with a communication service of the terminal device, the first target cell uses a first RAT, and the source cell and the second target cell use a second RAT different from the first RAT. The first target access network device provides the cell change cause indication for a second target access network device to which the second target cell belongs.

In a possible implementation, the first target access network device further obtains at least one of the following: an indication of a type of a voice fallback procedure and an indication of a cell change execution mode. The indication of the type of the voice fallback procedure indicates that the voice fallback procedure is an evolved packet system fallback for voice procedure or an inter-radio access technology fallback for voice procedure. The cell change execution mode includes handover or redirection.

In a possible implementation, that the first target access network device obtains a cell change cause indication includes: The first target access network device obtains the cell change cause indication from a source access network device to which the source cell belongs.

In a possible implementation, that the first target access network device obtains the cell change cause indication from a source access network device includes: The first target access network device obtains historical information of the terminal device from the source access network device, where the historical information includes the cell change cause indication. The cell change cause indication is sent to the first target access network device together with the historical information, so that additional signaling overheads can be avoided.

In a possible implementation, that the first target access network device provides the cell change cause indication for a second target access network device includes: The first target access network device provides second historical information of the terminal device for the second target access network device, where the second historical information includes the cell change cause indication, and the second historical information includes first historical information, and/or third historical information of the terminal device that is recorded by the first target access network device. The cell change cause indication is sent to the second target access network device together with the historical information, so that additional signaling overheads can be avoided.

In a possible implementation, that the first target access network device provides the cell change cause indication for a second target access network device includes: The first target access network device provides a handover request for the second cell change for the second target access network device, where the handover request includes the cell change cause indication. The cell change cause indication is sent to the second target access network device together with the handover request, so that additional signaling overheads can be avoided.

A third aspect of this application provides a communication method implemented at a second target access network device. The method includes: The second target access network device obtains a cell change cause indication, where the cell change cause indication indicates that a first cell change of a terminal device from a source cell to a first target cell or a second cell change of the terminal device from the first target cell to a second target cell of the second target access network device is associated with a communication service of the terminal device, the first target cell uses a first RAT, and the source cell and the second target cell use a second RAT different from the first RAT. The second target access network device sends the cell change cause indication to a source access network device to which the source cell belongs. In this way, the source access network device may distinguish a communication service procedure from an inter-system ping-pong event, to avoid invalid and redundant optimization of an inter-system handover parameter that is triggered by a normal communication service procedure of the terminal device.

In a possible implementation, the second target access network device further obtains at least one of the following: an indication of a type of a voice fallback procedure and an indication of a cell change execution mode. The indication of the type of the voice fallback procedure indicates that the voice fallback procedure is an evolved packet system fallback for voice procedure or an inter-radio access technology fallback for voice procedure. The cell change execution mode includes handover or redirection.

In a possible implementation, that the second target access network device obtains a cell change cause indication from the terminal device includes: receiving a radio resource control reconfiguration complete message from the terminal device, where the radio resource control reconfiguration complete message includes the cell change cause indication.

In a possible implementation, that the second target access network device obtains a cell change cause indication includes: obtaining the cell change cause indication from the terminal device.

In a possible implementation, that the second target access network device obtains the cell change cause indication from the terminal device includes: sending a request for historical information of the terminal device to the terminal device; and receiving the historical information from the terminal device, where the historical information includes the cell change cause indication. The cell change cause indication is sent to the second target access network device together with the historical information, so that additional signaling overheads can be avoided.

In a possible implementation, the obtaining a cell change cause indication includes: obtaining the cell change cause indication from the source access network device to which the source cell belongs.

In a possible implementation, the obtaining the cell change cause indication from the source access network device includes: obtaining historical information of the terminal device from the source access network device, where the historical information includes the cell change cause indication. The cell change cause indication is sent to the second target access network device together with the historical information, so that additional signaling overheads can be avoided.

In a possible implementation, the obtaining a cell change cause indication includes: obtaining the cell change cause indication from a first target access network device to which the first target cell belongs.

In a possible implementation, the obtaining the cell change cause indication from a first target access network device includes: obtaining second historical information of the terminal device from the first target access network device, where the second historical information includes the cell change cause indication, and the second historical information includes first historical information of the terminal device that is obtained by the first target access network device from the source access network device to which the source cell belongs, and/or third historical information of the terminal device that is recorded by the first target access network device. The cell change cause indication is sent to the second target access network device together with the historical information, so that additional signaling overheads can be avoided.

In a possible implementation, the obtaining the cell change cause indication from a first target access network device includes: receiving a handover request for the second cell change from the first target access network device, where the handover request includes the cell change cause indication.

A fourth aspect of this application provides a communication method implemented at a source access network device. The method includes: The source access network device obtains a cell change cause indication, where the cell change cause indication indicates that a first cell change or a second cell change is associated with a communication service of a terminal device. The first cell change includes that the terminal device changes from a source cell provided by the source access network device to a first target cell, and the second cell change includes that the terminal device changes from the first target cell to a second target cell. The first target cell uses a first radio access technology, and the source cell and the second target cell use a second radio access technology. The first radio access technology is different from the second radio access technology. Further, the source access network device determines, based on the cell change cause indication, that the first cell change and the second cell change are irrelevant to an inter-system ping-pong event. In this way, the source access network device may distinguish a communication service procedure from the inter-system ping-pong event, to avoid invalid and redundant optimization of an inter-system handover parameter that is triggered by a normal communication service procedure of the terminal device.

In a possible implementation, that the source access network device obtains a cell change cause indication includes: obtaining the cell change cause indication from a second target access network device to which the second target cell belongs.

In a possible implementation, the cell change cause indication indicates at least one of the following: The first cell change is associated with a voice fallback procedure of the terminal device from the source cell to the first target cell; and the second cell change is associated with a fast return procedure of the terminal device from the first target cell to the second target cell.

In a possible implementation, the method further includes: The source access network device obtains at least one of the following: an indication of a type of a voice fallback procedure and an indication of a cell change execution mode. The indication of the type of the voice fallback procedure indicates that the voice fallback procedure is an evolved packet system fallback for voice procedure or an inter-radio access technology fallback for voice procedure. The cell change execution mode includes handover or redirection.

In a possible implementation of the first aspect, the second aspect, the third aspect, or the fourth aspect, the cell change cause indication includes: a cause of the change of the terminal device from the source cell or the first target cell; and/or a cause of the change of the terminal device to the first target cell or the second target cell.

In a possible implementation of the first aspect, the second aspect, the third aspect, or the fourth aspect, the cell change cause indication indicates at least one of the following: The first cell change is associated with a voice fallback procedure of the terminal device from the source cell to the first target cell; or the second cell change is associated with a fast return procedure of the terminal device from the first target cell to the second target cell. In this way, invalid and redundant optimization of an inter-system handover parameter that is triggered by a voice service procedure of the terminal device is avoided.

In a possible implementation of the first aspect, the second aspect, the third aspect, or the fourth aspect, the voice fallback procedure includes a normal call voice fallback procedure or an emergency call voice fallback procedure, and the fast return procedure includes a normal call voice fast return procedure or an emergency call voice fast return procedure.

In a possible implementation of the first aspect, the second aspect, the third aspect, or the fourth aspect, the first RAT is one of a 2G RAT, a 3G RAT, and a 4G RAT, and the second RAT is a 5G RAT.

A fifth aspect of this application provides a communication apparatus, including units, modules, or means (means) configured to perform the steps described in the first aspect. The communication apparatus may be a terminal or an apparatus used in the terminal.

For example, the communication apparatus includes an obtaining unit and a sending unit. The obtaining unit is configured to obtain a cell change cause indication, where the cell change cause indication indicates that a first cell change of a terminal device from a source cell to a first target cell or a second cell change of the terminal device from the first target cell to a second target cell is associated with a communication service of the terminal device, the first target cell uses a first RAT, and the source cell and the second target cell use a second RAT different from the first RAT. The sending unit is configured to send the cell change cause indication to a second target access network device to which the second target cell belongs.

A sixth aspect of this application provides an access network device, including units, modules, or means (means) configured to perform the steps described in the second aspect.

For example, the access network device includes an obtaining unit and a provision unit. The obtaining unit is configured to obtain a cell change cause indication, where the cell change cause indication indicates that a first cell change of a terminal device from a source cell to a first target cell managed by the access network device or a second cell change from the first target cell to a second target cell is associated with a communication service of the terminal device, the first target cell uses a first RAT, and the source cell and the second target cell use a second RAT different from the first RAT. The provision unit is configured to provide the cell change cause indication for a second target access network device to which the second target cell belongs.

A seventh aspect of this application provides an access network device, including units, modules, or means (means) configured to perform the steps described in the third aspect.

The access network device includes an obtaining unit and a determining unit. The obtaining unit is configured to obtain a cell change cause indication, where the cell change cause indication indicates that a first cell change of a terminal device from a source cell to a first target cell or a second cell change of the terminal device from the first target cell to a second target cell managed by the access network device is associated with a communication service of the terminal device, the first target cell uses a first RAT, and the source cell and the second target cell use a second RAT different from the first RAT. The determining unit is configured to determine, based on the cell change cause indication, that the first cell change and the second cell change are irrelevant to an inter-system ping-pong event.

An eighth aspect of this application provides an access network device, including units, modules, or means (means) configured to perform the steps described in the fourth aspect.

The access network device includes an obtaining unit and a determining unit. The obtaining unit is configured to obtain a cell change cause indication, where the cell change cause indication indicates that a first cell change or a second cell change is associated with a communication service of a terminal device. The first cell change includes that the terminal device changes from a source cell provided by a source access network device to a first target cell, and the second cell change includes that the terminal device changes from the first target cell to a second target cell. The first target cell uses a first radio access technology, and the source cell and the second target cell use a second radio access technology. The determining unit is configured to determine, based on the cell change cause indication, that the first cell change and the second cell change are irrelevant to an inter-system ping-pong event.

A ninth aspect of this application provides a communication apparatus. The communication apparatus includes at least one processor and at least one memory, where the at least one memory is coupled to the at least one processor and stores instructions for execution by the at least one processor. When the instructions are executed by the at least one processor, the communication apparatus is enabled to implement the method according to any one of the first aspect, the second aspect, the third aspect, and the fourth aspect.

A tenth aspect of this application provides a computer-readable storage medium. The computer-readable storage medium stores a computer program. When the computer program is executed by a processor, the method according to any one of the first aspect, the second aspect, the third aspect, and the fourth aspect is implemented.

An eleventh aspect of this application provides a computer program product. The computer program product is tangibly stored in a computer-readable medium and includes computer-executable instructions. When the computer-executable instructions are executed, a device is enabled to implement the method according to any one of the first aspect, the second aspect, the third aspect, and the fourth aspect.

A twelfth aspect of this application provides a chip. The chip is configured to perform the method according to any one of the first aspect, the second aspect, the third aspect, and the fourth aspect.

A thirteenth aspect of this application provides a communication system. The communication system includes the communication apparatus according to the fifth aspect, the access network device according to the sixth aspect, the access network device according to the seventh aspect, and the access network device according to the eighth aspect.

### BRIEF DESCRIPTION OF DRAWINGS

Features, advantages, and other aspects of implementations of this application become more apparent with reference to the accompanying drawings and with reference to the following detailed descriptions. Several implementations of this application are shown herein by way of example rather than limitation. In the accompanying drawings:
FIG. 1 is a block diagram of a communication network in which a possible implementation of this application may be implemented;
FIG. 2A and FIG. 2B each are a block diagram of a communication network in which a possible implementation of this application may be implemented;
FIG. 3 is a signaling interaction diagram of an example communication process according to a possible implementation of this application;
FIG. 4 and FIG. 5 each are a signaling interaction diagram of an example communication process according to another possible implementation of this application;
FIG. 6 is a signaling interaction diagram of an example communication process according to still another possible implementation of this application;
FIG. 7A and FIG. 7B and FIG. 8 each are a signaling interaction diagram of an example communication process according to yet another possible implementation of this application;
FIG. 9 is a flowchart of a communication method according to a possible implementation of this application;
FIG. 10 is a flowchart of a communication method according to another possible implementation of this application;
FIG. 11 is a flowchart of a communication method according to still another possible implementation of this application;
FIG. 12 is a block diagram of a terminal device according to a possible implementation of this application;
FIG. 13 is a block diagram of a first access network device according to another possible implementation of this application;
FIG. 14 is a block diagram of a second access network device according to still another possible implementation of this application; and
FIG. 15 is a simplified block diagram of an example device suitable for implementing a possible implementation of this application.

In the accompanying drawings, same or similar reference numerals represent same or similar elements.

### DESCRIPTION OF EMBODIMENTS

The following describes possible implementations of this application in more detail with reference to the accompanying drawings.

In descriptions of the possible implementations of this application, the term "include" and similar terms thereof should be understood as open inclusion, that is, "include but not limited to". The term "based on" should be understood as "at least partially based on". The term "one possible implementation" or "the possible implementation" should be understood as "at least one possible implementation". The terms "first", "second", and the like may indicate different objects or a same object. Other explicit and implicit definitions may also be included below. An expression similar to "at least one of A, B, and C" or "at least one of A, B, or C" should be understood as any one of the following: at least one A; at least one B; at least one C; at least one A and at least one B; at least one A and at least one C; at least one B and at least one C; and at least one A, at least one B, and at least one C. The foregoing uses three elements A, B, and C as an example for description. When there are more elements in the expression, a meaning of the expression may be obtained according to the foregoing rule.

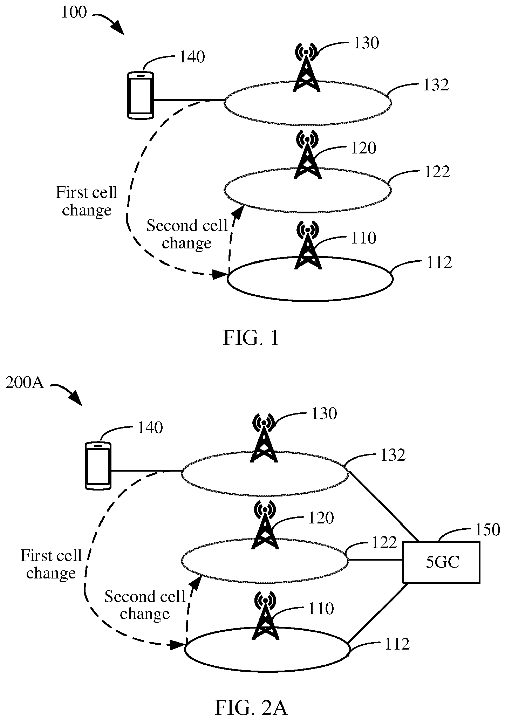

FIG. 1 is a block diagram of a communication network 100 in which a possible implementation of this application may be implemented. As shown in the figure, the communication network 100 includes access network devices 110, 120, and 130, and a terminal device 140.

The access network devices 110, 120, and 130 are radio access network (Radio Access Network, RAN) devices that connect the terminal device 140 to a wireless network. An example of the RAN device may include but is not limited to: a next generation NodeB (Next generation NodeB, gNB), a transmission reception point (Transmission Reception Point, TRP), an evolved NodeB (Evolved NodeB, eNB), a radio network controller (Radio Network Controller, RNC), a NodeB (NodeB, NB), a base station controller (Base Station Controller, BSC), a base transceiver station (Base Transceiver Station, BTS), a home base station (for example, a home evolved NodeB, or a home NodeB), a baseband unit (Baseband Unit, BBU), a wireless fidelity (Wireless Fidelity, Wi-Fi) access point (Access Point, AP), an integrated access and backhaul (Integrated Access and Backhaul, IAB) node, or the like. In a possible implementation, at least one of the access network devices 110, 120, and 130 may include a central unit (Central Unit, CU), a distributed unit (Distributed Unit, DU), or both the CU and the DU.

The terminal device 140 is a device that has a wireless transceiver function. The terminal device 140 may be deployed on land, including an indoor or outdoor device, a handheld device, or a vehicle-mounted device; may be deployed on the water (for example, on a ship); or may be deployed in the air (for example, on an airplane, a balloon, or a satellite). The terminal device 140 may be a mobile phone (Mobile Phone), a tablet computer (Pad), a computer having a wireless transceiver function, a virtual reality (Virtual Reality, VR) terminal device, an augmented reality (Augmented Reality, AR) terminal device, a wireless terminal device in industrial control (Industrial Control), a wireless terminal device in self-driving (Self-Driving), a wireless terminal device in telemedicine (telemedicine), a wireless terminal device in smart grid (Smart Grid), a wireless terminal in transportation safety (Transportation Safety), a wireless terminal device in smart city (Smart City), a wireless terminal device in smart home (Smart Home), user equipment (User Equipment, UE), or the like.

It may be understood that quantities of the access network devices and the terminal devices shown in FIG. 1 are merely examples, and are not intended to impose any limitation. Based on an actual requirement, the communication network 100 may include access network devices and terminal devices of any appropriate quantity.

The access network device 110 uses a first RAT, and the access network devices 120 and 130 use a second RAT different from the first RAT. In other words, a communication standard of the access network device 110 is different from a communication standard of the access network devices 120 and 130. In a possible implementation, the first RAT may be one of a 2G RAT, a 3G RAT, and a 4G RAT, and the second RAT may be a 5G RAT. Although a possible implementation of this application is described below by using an example in which the first RAT is the 4G RAT and the second RAT is the 5G RAT, in another possible implementation, the first RAT and the second RAT may alternatively be other RATs, provided that the first RAT and the second RAT are different from each other. For example, in another possible implementation, the first RAT may be the 2G or 3G RAT, and the second RAT may be the 4G RAT.

At least one of the access network devices 110, 120, and 130 provides a service for the terminal device 140. Service areas of the access network devices 110, 120, and 130 are respectively referred to as cells 112, 122, and 132.

In a possible implementation, a communication service of the terminal device 140 may trigger the terminal device 140 to change from the cell 132 to the cell 112, and then change from the cell 112 to the cell 122. In this possible implementation, the access network device 130 is also referred to as a source access network device 130, and the cell 132 is also referred to as a source cell 132; the access network device 110 is also referred to as a first target access network device 110, and the cell 112 is also referred to as a first target cell 112; and the access network device 120 is also referred to as a second target access network device 120, and the cell 122 is also referred to as a second target cell 122. In the following description, the cell change of the terminal device 140 from the cell 132 to the cell 112 is also referred to as a first cell change, and the cell change of the terminal device 140 from the cell 112 to the cell 122 is also referred to as a second cell change.

A "cell change" may also be referred to as a "cell change". In a possible implementation, a cell change or a cell change execution mode may include handover or redirection.

In a possible implementation, the communication network 100 may use a dual connectivity mode. In the dual connectivity mode, the terminal device 140 may be connected to both a primary node and a secondary node, the primary node may be an access network device using the 5G RAT, and the secondary node may be an access network device using the 4G RAT. The primary node may establish a control plane connection to a 5G core network, and the primary node and the secondary node may separately establish a user plane connection to the 5G core network. This is described with reference to FIG. 2A.

FIG. 2A is a block diagram of a communication network 200A in which a possible implementation of this application may be implemented. The communication network 200A may be considered as an example implementation of the communication network 100. As shown in FIG. 2A, the communication network 200Aincludes the access network devices 110, 120, and 130, and the terminal device 140. The communication network 200A uses a dual connectivity mode. The access network devices 120 and 130 using the 5G RAT are connected to a 5GC 150, and the access network device 110 using the 4G RAT is also connected to the 5GC 150. In the communication network 200A, the access network device 120 or 130 is used as a primary node, and the access network device 110 is used as a secondary node. The terminal device 140 is connected to both the access network device 110 and one of the access network devices 120 and 130.

It may be understood that, in the dual connectivity mode, the terminal device 140 changes from a cell of the primary node to a cell of the secondary node, to perform some types of communication services (for example, a voice service). In this case, another communication service (for example, a communication service other than the voice service) of the terminal device 140 is still performed in the primary node. After completing the communication service, the terminal device 140 may change from the cell of the secondary node to the cell of the primary node, and re-access a cell of the primary node. In addition, in a dual connectivity scenario, a source cell is the cell of the primary node, and a first target cell is the cell of the secondary node. The re-accessed cell of the primary node may be different from the source cell.

In another possible implementation, the communication network 100 may use a single connectivity mode. In the single connectivity mode, an access network device using the 5G RAT may be connected to a 5G core network 5GC, and an access network device using the 4G RAT may be connected to an evolved packet core (Evolved Packet Core, EPC). The terminal device 140 is connected to only the access network device using the 5G RAT or the access network device using the 4G RAT.

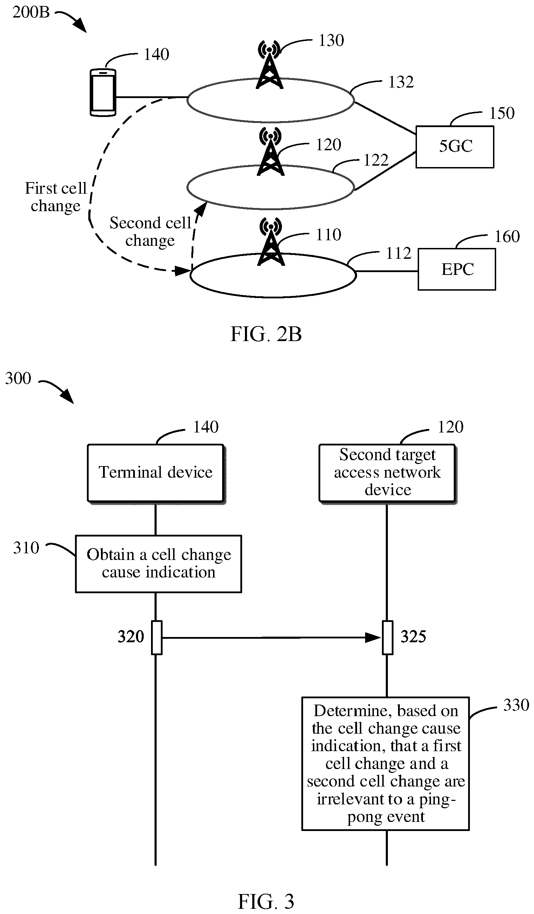

In the single connectivity mode, the terminal device 140 may change from a source cell using the 5G RAT to a target cell using the 4G RAT, to perform some types of communication services (for example, a voice service). In this case, the terminal device 140 is handed over to the target cell for all the communication services. After completing these communication services, the terminal device 140 may change from the target cell back to a cell in a source system, and re-access a cell in the source system. The cell in the source system may be a source cell, or another cell using a same RAT as the source cell. This is described with reference to FIG. 2B.

FIG. 2B is a block diagram of a communication network 200B in which a possible implementation of this application may be implemented. The communication network 200B may be considered as another example implementation of the communication network 100. In the communication network 200B, the access network devices 120 and 130 using the 5G RAT are separately connected to the 5GC 150, and the access network device 110 using the 4G RAT is connected to an EPC 160.

In a possible implementation, an example of a communication service that triggers the terminal device 140 to perform the first cell change and the second cell change may include but is not limited to a voice service and a data service. The following describes possible implementations of this application by using the voice service as an example. However, it should be understood that the solutions in this application are also applicable to a communication service other than the voice service.

In an implementation in which the communication service is the voice service, a 5G network may not support the voice service (for example, VoNR). A reason why the 5G network does not support the voice service may be at least one of the following: an IMS is not deployed on the 5GC; the IMS is deployed on the 5GC, but 5G cell coverage is not available or 5G cell coverage is poor; and the IMS is deployed on the 5GC, but a capability of the terminal device does not support a 5G network-based voice service. In this implementation, before setting up a voice call, the terminal device 140 may be handed over or redirected to a 4G cell (for example, the cell 112 using the 4G RAT), so that the voice service falls back (fallback) to a 4G network, thereby ensuring execution of the voice service; or the terminal device 140 may be handed over to a 3G or 2G cell (for example, the cell 112 using the 3G or 2G RAT) through single radio voice call continuity (Single Radio Voice Call Continuity, SRVCC), so that the voice service falls back to a 3G or 2G network. After the terminal device 140 completes the voice service and deletes a voice service bearer in the 4G, 3G, or 2G network, if it is determined that there is no service for which the terminal device 140 "cannot be handed over", a fast return (fast return) procedure is triggered, so that the terminal device 140 re-accesses a 5G cell.

It can be learned that the voice service procedure involves a first inter-system handover from the 5G cell to the 4G, 3G, or 2G cell, and a second inter-system handover from the 4G, 3G, or 2G cell to the 5G cell.

Similarly, an inter-system ping-pong (Inter-system Ping-pong) event also involves two inter-system handovers. Specifically, the inter-system ping-pong event is defined as follows: The terminal device is handed over from a cell in a source system (for example, a 5G system) to a cell in a target system (for example, an evolved packet system (Evolved Packet System, EPS)) different from the source system, and then the terminal device is handed over to the cell in the source system within a predefined limited time, where coverage of the source system is sufficient to meet a service used by the terminal device. The event may occur more than once. After it is determined that the inter-system ping-pong event occurs, the access network device after the second inter-system handover indicates the inter-system ping-pong event to the source access network device. Correspondingly, the source access network device may optimize an inter-system handover parameter, for example, increase a threshold for an inter-system handover, to avoid recurrence of the inter-system ping-pong event.

According to the foregoing descriptions, it may be understood that the inter-system ping-pong event occurs when coverage quality of the cell in the source system meets a service requirement, but an inter-system handover is performed due to improper setting of the inter-system handover parameter, and then a handover back to the source system is triggered due to the coverage quality. The two inter-system handovers in the voice service procedure are triggered by a communication service procedure, and are irrelevant to the coverage and the inter-system handover parameter. In this way, to avoid invalid and redundant optimization of an inter-system handover parameter that is triggered by a normal communication service procedure of the terminal device, the communication service procedure needs to be distinguished from the inter-system ping-pong event.

For at least the foregoing problem and another potential related problem, this application proposes a communication method. A cell change cause indication is provided for the access network device after the second inter-system handover, to indicate that the first inter-system cell change or the second inter-system cell change is associated with the communication service of the terminal device. The access network device may determine that the two inter-system cell changes are irrelevant to the inter-system ping-pong event. The following describes in detail possible implementations of this application with reference to FIG. 3 to FIG. 15.

FIG. 3 is a signaling interaction diagram of an example communication process 300 according to a possible implementation of this application. For purposes of description, the communication process 300 is described with reference to the various elements shown in FIG. 1. However, it should be understood that the communication process 300 may alternatively be performed between an access network device and a terminal device in any other communication scenario.

As shown in FIG. 3, the terminal device 140 obtains (310) a cell change cause indication, where the cell change cause indication indicates that a first cell change of the terminal device 140 from the source cell 132 to the first target cell 112 or a second cell change from the first target cell 112 to the second target cell 122 is associated with a communication service of the terminal device 140. The first target cell 112 uses a first RAT, and the source cell 132 and the second target cell 122 use a second RAT different from the first RAT.

As described above, the "cell change" may also be referred to as a "cell change", and a cell change or cell change execution mode may include handover or redirection. In this way, in an implementation, the cell change cause indication may be a handover cause indication.

The terminal device 140 sends (320) the cell change cause indication to the second target access network device 120 to which the second target cell 122 belongs. Correspondingly, the second target access network device 120 receives (325) the cell change cause indication. Further, the second target access network device 120 determines (330), based on the cell change cause indication, that the first cell change and the second cell change are irrelevant to an inter-system ping-pong event. Therefore, the second target access network device 120 may not indicate the inter-system ping-pong event to the source access network device 130, to avoid triggering invalid and redundant inter-system handover parameter optimization, save system resources, and improve communication efficiency.

In a possible implementation, the cell change cause indication may indicate at least one of the following: The first cell change is associated with a voice fallback procedure of the terminal device 140 from the source cell 132 to the first target cell 112; and the second cell change is associated with a fast return procedure of the terminal device 140 from the first target cell 112 to the second target cell 122.

In a possible implementation, the terminal device 140 may further obtain at least one of the following: an indication of a type of a voice fallback procedure and an indication of a cell change execution mode. The indication of the type of the voice fallback procedure may indicate that the voice fallback procedure is an evolved packet system fallback (EPS fallback) for voice procedure or an inter-radio access technology fallback (Inter-RAT fallback) for voice procedure. The cell change execution mode may include handover or redirection.

In a possible implementation, the first RAT may be one of a 2G RAT, a 3G RAT, and a 4G RAT, and the second RAT may be a 5G RAT. In another possible implementation, the first RAT may be a 2G or 3G RAT, and the second RAT may be a 4G RAT.

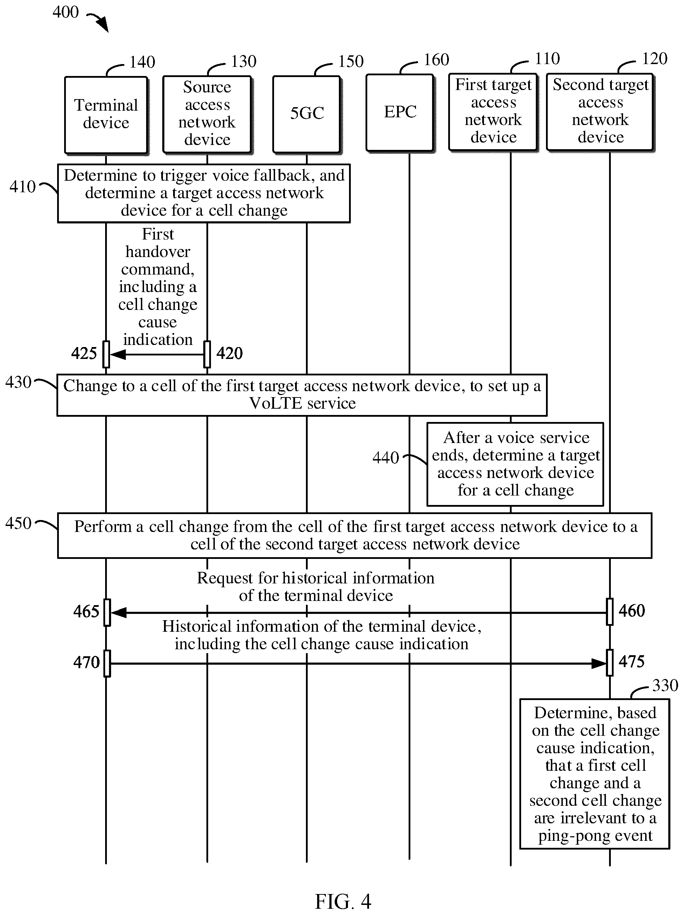

In a possible implementation, the terminal device 140 may obtain the cell change cause indication from the source access network device 130 to which the source cell 132 belongs. In the implementation, the terminal device 140 may receive, from the source access network device 130, a first cell change command associated with the first cell change, where the first cell change command may include the cell change cause indication. This is described with reference to FIG. 4.

FIG. 4 is a signaling interaction diagram of an example communication process 400 according to a possible implementation of this application. For purposes of description, the communication process 400 is described with reference to the various elements shown in FIG. 2B. The communication process 400 may be considered as an example implementation of the communication process 300. In the communication process 400, the terminal device 140 sets up an initial VoNR voice service or is in a VoNR voice service.

In a possible implementation, to set up the VoNR voice service, the terminal device 140 may send a request message to the 5GC 150, to request to set up a voice session. After receiving the request message, the 5GC 150 may forward the request message to the source access network device 130. The request message may indicate the source access network device 130 to set up a dedicated voice bearer whose 5G quality of service indicator (5G Quality of Service Indicator, 5QI) is 1. If the source cell 132 does not support VoNR, in 410, the source access network device 130 may reply to the 5GC 150 with a rejection message and indicate voice fallback, and may determine a target access network device (for example, the first target access network device 110) for a cell change based on a handover parameter configuration and a capability of the terminal device 140.

After determining the first target access network device 110, the source access network device 130 may send a handover request to the 5GC 150 through an NG interface, and then the 5GC 150 may forward context information of the terminal device 140 to the EPC 160. The EPC 160 may send the handover request to the first target access network device 110 through an S1 interface. After receiving a response message for the handover request from the first target access network device 110, the EPC 160 forwards the response message to the 5GC 150. Alternatively, the source access network device 130 may send the handover request to the first target access network device 110 through an X2 interface, and the first target access network device 110 may send a response message for the handover request to the source access network device 130 through an X2 interface.

Further, the 5GC 150 may send a handover command to the source access network device 130, and the source access network device 130 may send (420) a handover command (that is, a first handover command) to the terminal device 140. The first handover command includes the cell change cause indication. Correspondingly, the terminal device 140 receives (425) the first handover command. The cell change cause indication may indicate a handover of the terminal device 140 to the first target cell 112 is associated with a voice fallback procedure of the terminal device 140 from the source cell 132 to the first target cell 112.

In a possible implementation, the first handover command from the source access network device 130 may include but is not limited to a mobility from NR command (Mobility from NR Command).

In a possible implementation, to reduce signaling overheads, the source access network device 130 may send, in the first handover command, the cell change cause indication and information about the first target cell 112 in an association manner. The information about the first target cell 112 may include, for example, but is not limited to, an identifier (ID) of the first target cell 112.

Subsequently, the terminal device 140 changes (430) to the first target cell 112, to set up a VoLTE service. For example, a tracking area update (Tracking Area Update, TAU) procedure may be initiated between the terminal device 140 and the EPC 160, so that the EPC 160 can trigger setup of a dedicated voice bearer whose QoS class identifier (QoS Class Identifier, QCI) is 1.

In addition, the terminal device 140 may record the cell change cause indication in historical information of the terminal device 140. For example, the terminal device 140 may record the cell change cause indication and the related information about the first target cell 112 in an association manner. Alternatively, the terminal device 140 may record the cell change cause indication and related information about the source cell 132 in an association manner.

In a possible implementation, the terminal device 140 may further record an indication of a type of a voice fallback procedure in the historical information of the terminal device 140. The indication of the type of the voice fallback procedure may indicate that the voice fallback procedure is an EPS fallback for voice procedure or an inter-RAT fallback for voice procedure. For example, as shown in FIG. 2B, in an implementation in which the access network devices 120 and 130 using the 5G RAT are respectively connected to the 5GC 150, and the access network device 110 using the 4G RAT is connected to the EPC 160, the indication of the type of the voice fallback procedure may indicate that the voice fallback procedure is an EPS fallback for voice procedure. For another example, as shown in FIG. 2A, in an implementation in which the access network devices 120 and 130 using the 5G RAT and the access network device 110 using the 4G RAT are connected to the 5GC 150, the indication of the type of the voice fallback procedure may indicate that the voice fallback procedure is an inter-RAT fallback for voice procedure.

In another possible implementation, the terminal device 140 may alternatively record an indication of a cell change execution mode in the historical information of the terminal device 140. The indication of the cell change execution mode may indicate whether the terminal device 140 performs the cell change through handover or redirection.

In still another possible implementation, the terminal device 140 may alternatively record a joint indication of the type of the voice fallback procedure and the cell change execution mode in the historical information of the terminal device 140. For example, the joint indication may indicate one of the following: an EPS fallback for voice procedure performed by the terminal device 140 through handover, an EPS fallback for voice procedure performed through redirection, an inter-RAT fallback for voice procedure performed through handover, and an inter-RAT fallback for voice procedure performed through redirection.

After a voice service ends, the first target access network device 110 determines (440) a target access network device for a cell change. For example, the first target access network device 110 may determine the second target access network device 120 as the target access network device for the cell change based on coverage quality information that is of a primary serving cell and an inter-system neighboring cell and that is reported by the terminal device 140. Subsequently, the terminal device 140 performs (450) a handover from the first target cell 112 managed by the first target access network device 110 to the second target cell 122 managed by the second target access network device 120.

After the terminal device 140 accesses the second target cell 122, the second target access network device 120 sends (460) a request for the historical information of the terminal device 140 to the terminal device 140. In response to receiving (465) the request, the terminal device 140 sends (470) the historical information of the terminal device 140 to the second target access network device 120, where the historical information includes the cell change cause indication. Correspondingly, the second target access network device 120 receives (476) the historical information of the terminal device 140.

In a possible implementation, the terminal device 140 may store, as a part of UE history information (UE History Information, UHI), information about a cell on which the terminal device 140 camps. The information about the camped-on cell may include, for example, an identifier of the camped-on cell and camping time. In the implementation, the terminal device 140 may include, in the UHI, the cell change cause indication obtained from the source access network device 130. For example, the terminal device 140 may store the cell change cause indication and the information about the first target cell 112 in an association manner, to indicate that the cell change to the first target cell 112 is associated with the voice fallback procedure of the terminal device 140 from the source cell 132 to the first target cell 112. In the implementation, the terminal device 140 may send the UHI to the second target access network device 120, so that the second target access network device 120 obtains the historical information of the terminal device 140, where the UHI includes the cell change cause indication. Alternatively, the terminal device 140 may store the cell change cause indication and information about the source cell 132 in an association manner, to indicate that changing from the source cell 132 is associated with the voice fallback procedure of the terminal device 140 from the source cell 132 to the first target cell 112.

After receiving the cell change cause indication, the second target access network device 120 determines (330), based on the cell change cause indication or based on the cell change cause indication and camping time in the first target cell, that the first cell change and the second cell change are irrelevant to an inter-system ping-pong event. Therefore, the second target access network device 120 may not indicate the inter-system ping-pong event to the source access network device 130, to avoid triggering the source access network device 130 to adjust a handover parameter based on the inter-system ping-pong event. In addition, because the handover parameter adjustment performed when the two inter-system handovers are irrelevant to the inter-system ping-pong event occupies processing time of the source access network device, communication efficiency can be improved by using the solutions of this application.

In another possible implementation, the second target access network device 120 may not perform the action 330, that is, does not determine (330), based on the cell change cause indication, that the first cell change and the second cell change are irrelevant to the inter-system ping-pong event. Alternatively, the second target access network device 120 may send the cell change cause indication to the source access network device 130 to which the source cell belongs. For example, the second target access network device 120 may generate an inter-system ping-pong report, where the inter-system ping-pong report includes the cell change cause indication. The second target access network device 120 may send the inter-system ping-pong report to the source access network device 130 by using one of the following messages: a handover report message of an Xn interface, or an uplink RAN configuration transfer (uplink RAN configuration transfer) message or a downlink RAN configuration transfer (downlink RAN configuration transfer) message of an NG interface. After receiving the cell change cause indication, the source access network device 130 may determine, based on the cell change cause indication, that the first cell change and the second cell change are irrelevant to the inter-system ping-pong event, and does not perform mobility parameter optimization.

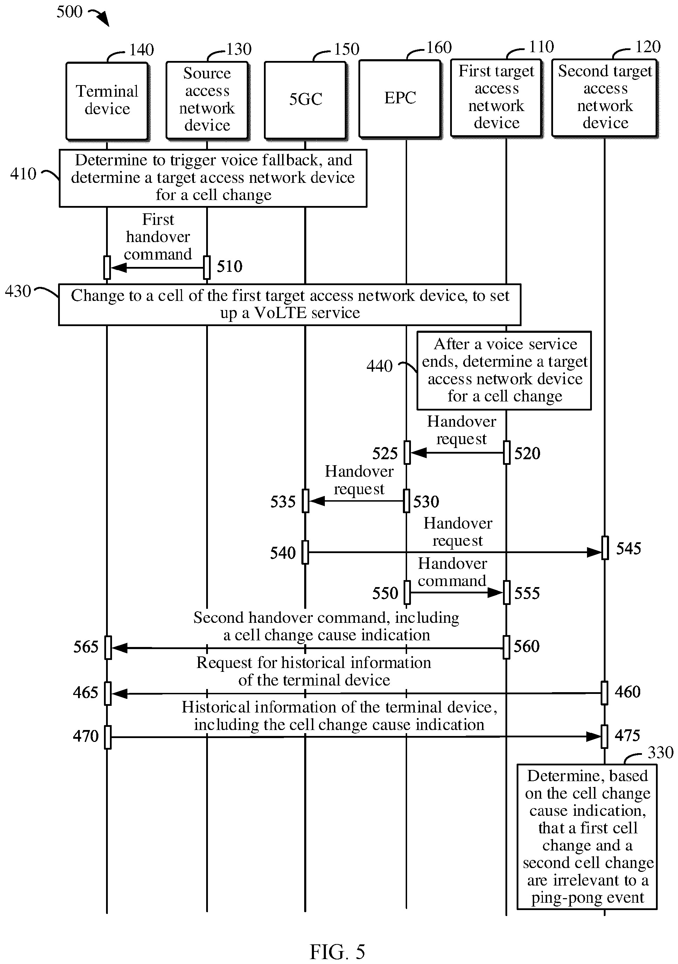

In addition to obtaining the cell change cause indication from the source access network device 130, in a possible implementation, the terminal device 140 may alternatively obtain the cell change cause indication from the first target access network device 110. In the implementation, the terminal device 140 receives, from the first target access network device 110, a second handover command associated with the second cell change, where the second handover command includes the cell change cause indication. This is described with reference to FIG. 5.

FIG. 5 is a signaling interaction diagram of an example communication process 500 according to a possible implementation of this application. For purposes of description, the communication process 500 is described with reference to the various elements shown in FIG. 2B. The communication process 500 may be considered as another example implementation of the communication process 300. In the communication process 500, the terminal device 140 sets up an initial VoNR voice service or is in a VoNR voice service. Actions such as 410, 430, 440, 450, 465, 470, 475, and 330 in the communication process 500 are similar to corresponding actions in the communication process 400, and therefore are not described again. A difference between the communication process 500 and the communication process 400 lies in that a first handover command received (510) by the terminal device 140 from the source access network device 130 does not include the cell change cause indication. Alternatively, the second handover command received (560) by the terminal device 140 from the first target access network device 110 includes the cell change cause indication.

Specifically, after a voice service of the terminal device 140 ends and the first target access network device 110 determines (440) a target access network device (for example, the second target access network device 120) for a cell change, the first target access network device 110 sends (520) a handover request to the EPC 160, to request to quickly return the terminal device 140 to the second target cell 122 of the second target access network device 120. After receiving (525) the handover request, the EPC 160 sends (530) the handover request to the 5GC 150. Optionally, the EPC 160 may send context information of the terminal device 140 and the handover request together to the 5GC 150. After receiving (535) the handover request, the 5GC 150 sends (540) the handover request to the second target access network device 120, to notify the second target access network device 120 to prepare for handover. After receiving (545) the handover request, the second target access network device 120 sends a handover preparation complete message (not shown in the figure) to the 5GC 150, and then the 5GC 150 forwards the handover preparation complete message (not shown in the figure) to the EPC 160.

After receiving the handover preparation complete message, the EPC 160 sends (550), to the first target access network device 110, a handover command for handover from the first target cell 112 to the second target cell 122. After receiving (555) the handover command, the first target access network device 110 sends (560), to the terminal device 140, the handover command (that is, the second handover command) for handover from the first target cell 112 to the second target cell 122. The second handover command includes the cell change cause indication, to indicate that the handover to the second target cell 122 is associated with a fast return procedure.

In a possible implementation, the second handover command from the first target access network device 110 may include but is not limited to a mobility from evolved universal mobile telecommunications system terrestrial radio access (Evolved-UMTS Terrestrial Radio Access, EUTRA) command (Mobility from EUTRA Command).

In a possible implementation, to reduce signaling overheads, the first target access network device 110 may send, in the second handover command, the cell change cause indication and related information about the second target cell 122 in an association manner.

After receiving (565) the second handover command, the terminal device 140 may record the cell change cause indication in historical information of the terminal device 140. For example, the terminal device 140 may record the cell change cause indication and the information about the second target cell 122 in an association manner. For example, to record the cell change cause indication and the information about the second target cell 122 in the association manner, the cell change cause indication and the information about the second target cell 122 may be recorded in an entry of a list.

In a possible implementation, in response to receiving (565) the second handover command that includes the cell change cause indication, the terminal device 140 may send a radio resource control reconfiguration complete (RRCReconfigurationComplete) message to the second target access network device 120, the RRCReconfigurationComplete message includes the cell change cause indication, to indicate, to the second target access network device 120, that a change to the second target cell 122 is associated with a voice fallback procedure or a fast return procedure.

In another possible implementation, similar to the process 400, in the process 500, the second target access network device 120 may not perform the action 330, that is, does not determine (330), based on the cell change cause indication, that a first cell change and a second cell change are irrelevant to an inter-system ping-pong event. Alternatively, the second target access network device 120 may send the cell change cause indication to the source access network device 130 to which a source cell belongs. After receiving the cell change cause indication, the source access network device 130 may determine, based on the cell change cause indication, that the first cell change and the second cell change are irrelevant to the inter-system ping-pong event, and does not perform mobility parameter optimization.

It should be understood that the communication processes 400 and 500 are described above with reference to the various elements shown in FIG. 2B. However, at least one of the communication processes 400 and 500 may alternatively be performed among a terminal device, an access network device, and a core network device in any other communication scenario. For example, at least one of the communication processes 400 and 500 may alternatively be performed among the terminal device, the access network device, and the core network device in the communication network 200A shown in FIG. 2A. In the implementation, a message exchanged between the first target access network device 110 and the second target access network device 120 may be forwarded only by using the 5GC 150.

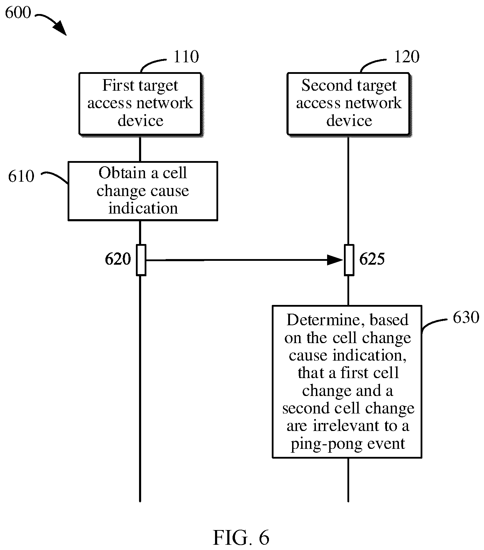

The foregoing describes, with reference to FIG. 3 to FIG. 5, an implementation in which the terminal device 140 sends the cell change cause indication to the second target access network device 120 (that is, the second target access network device 120 obtains the cell change cause indication from the terminal device 140). In another possible implementation, the second target access network device 120 may alternatively obtain the cell change cause indication from the first target access network device 110. This is described below with reference to FIG. 6 to FIG. 8.

FIG. 6 is a signaling interaction diagram of an example communication process 600 according to a possible implementation of this application. For purposes of description, the communication process 600 is described with reference to the various elements shown in FIG. 1. However, it should be understood that the communication process 600 may alternatively be performed between an access network device and a terminal device in any other communication scenario.

As shown in FIG. 6, the first target access network device 110 obtains (610) a cell change cause indication, where the cell change cause indication indicates that a first cell change of the terminal device 140 from the source cell 132 to the first target cell 112 or a second cell change from the first target cell 112 to the second target cell 122 is associated with a communication service of the terminal device 140. The first target cell 112 uses a first RAT, and the source cell 132 and the second target cell 122 use a second RAT different from the first RAT.

The first target access network device 110 sends (620) the cell change cause indication to the second target access network device 120. Correspondingly, the second target access network device 120 receives (625) the cell change cause indication. Further, the second target access network device 120 determines (630), based on the cell change cause indication or based on the cell change cause indication and camping time in the first target cell, that the first cell change and the second cell change are irrelevant to an inter-system ping-pong event. Therefore, the second target access network device 120 may not indicate the inter-system ping-pong event to the source access network device 130, to avoid triggering invalid and redundant inter-system handover parameter optimization.

In another possible implementation, the second target access network device 120 may not perform the action 630. Alternatively, the second target access network device 120 may send the cell change cause indication to the source access network device 130 to which the source cell belongs. For example, the second target access network device 120 may generate an inter-system ping-pong report, where the inter-system ping-pong report includes the cell change cause indication. The second target access network device 120 may send the inter-system ping-pong report to the source access network device 130 by using one of the following messages: a handover report message of an Xn interface, or an uplink RAN configuration transfer (uplink RAN configuration transfer) message or a downlink RAN configuration transfer (downlink RAN configuration transfer) message of an NG interface. After receiving the cell change cause indication, the source access network device 130 may determine, based on the cell change cause indication, that the first cell change and the second cell change are irrelevant to the inter-system ping-pong event, and does not perform mobility parameter optimization.

In a possible implementation, the cell change cause indication may indicate at least one of the following: The first cell change is associated with a voice fallback procedure of the terminal device 140 from the source cell 132 to the first target cell 112; and the second cell change is associated with a fast return procedure of the terminal device 140 from the first target cell 112 to the second target cell 122.

In a possible implementation, the first RAT may be one of a 2G RAT, a 3G RAT, and a 4G RAT, and the second RAT may be a 5G RAT. In another possible implementation, the first RAT may be a 2G or 3G RAT, and the second RAT may be a 4G RAT.

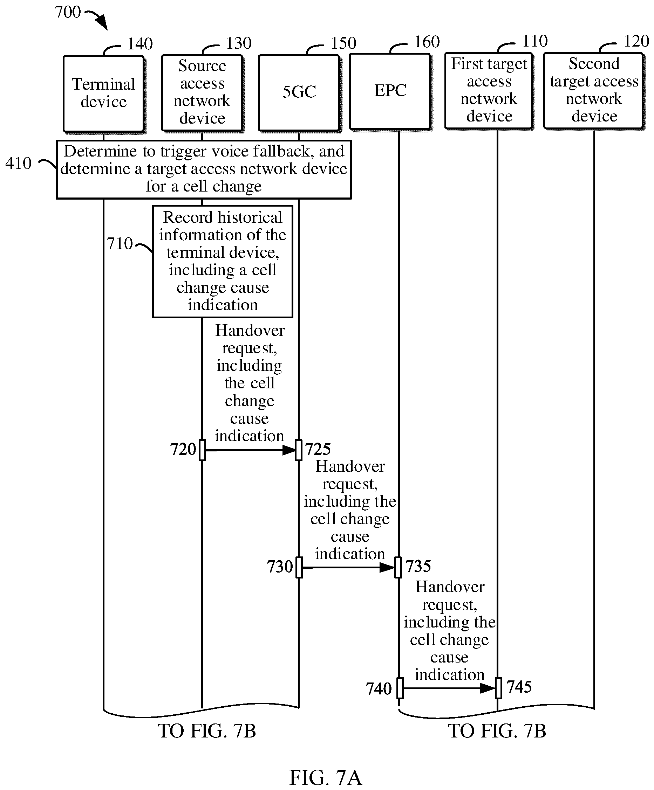

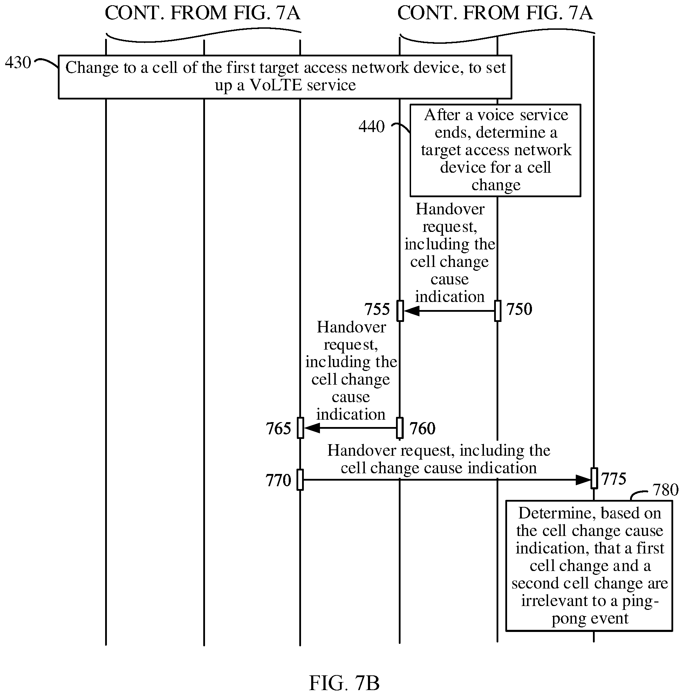

In a possible implementation, the first target access network device 110 may obtain the cell change cause indication from the source access network device 130 to which the source cell 132 belongs. In the implementation, the first target access network device 110 may obtain historical information of the terminal device 140 from the source access network device 130. The historical information may include information about a cell on which the terminal device 140 camps, camping time, and the cell change cause indication. This is described with reference to FIG. 7A and FIG. 7B.

FIG. 7A and FIG. 7B are a signaling interaction diagram of an example communication process 700 according to a possible implementation of this application. For purposes of description, the communication process 700 is described with reference to the various elements shown in FIG. 2B. The communication process 700 may be considered as an example implementation of the communication process 600.

In the communication process 700, the source access network device 130 records the historical information of the terminal device 140, where the historical information includes the cell change cause indication. For example, the source access network device 130 may store the historical information of the terminal device 140 as UHI, where the UHI includes the cell change cause indication. Further, the first target access network device 110 obtains the UHI that includes the cell change cause indication from the source access network device 130 by using a handover request from the source cell 132 to the first target cell 112. After the terminal device 140 completes a voice service in the first target cell 112, the first target access network device 110 further provides the UHI that includes the cell change cause indication for the second target access network device 120 by using a handover request from the first target cell 112 to the second target cell 122.

Specifically, similar to the communication process 400, in the communication process 700, the terminal device 140 sets up an initial VoNR voice service or is in a VoNR voice service. An action 410 in the communication process 700 is similar to the action 410 in the communication process 400, and therefore is not described in detail again.

After determining (410) a target access network device (for example, the first target access network device 110) for a cell change, the source access network device 130 records (710) the historical information of the terminal device 140. The historical information includes the cell change cause indication. In a possible implementation, the source access network device 130 may store the cell change cause indication as a part of the UHI. For example, the source access network device 130 may store the cell change cause indication and information about the source cell 132 in an association manner, to indicate that a cause of the change of the terminal device 140 from the source cell 132 of the source access network device 130 is associated with a voice fallback procedure from the source cell 132 to the first target cell 112 of the first target access network device 110. Alternatively, the source access network device 130 may store the cell change cause indication and information about the first target cell 112 in an association manner, to indicate that a cause of the change of the terminal device 140 to the first target cell 112 is associated with the voice fallback procedure from the source cell 132 to the first target cell 112.

Further, the source access network device 130 sends (720), to the 5GC 150, the handover request from the source cell 132 to the first target cell 112. The handover request includes the UHI of the terminal device 140, and the UHI includes the cell change cause indication. After receiving (725) the handover request, the 5GC 150 sends (730) the handover request to the EPC 160. The handover request includes the UHI of the terminal device 140, and the UHI includes the cell change cause indication. After receiving (735) the handover request, the EPC 160 sends (740) the handover request to the first target access network device 110, to notify the first target access network device 110 to prepare for handover. The handover request includes the UHI of the terminal device 140, and the UHI includes the cell change cause indication. After receiving (745) the handover request, the first target access network device 110 sends a handover preparation complete message (not shown in the figure) to the EPC 160, and then the EPC 160 forwards the handover preparation complete message (not shown in the figure) to the 5GC 150.

Alternatively, in another possible implementation, the source access network device 130 may not send the handover request to the first target access network device 110 by using the 5GC 150 and the EPC 160, but send the handover request to the first target access network device 110 through an X2 interface.

In addition, in another possible implementation, the UHI may alternatively include an indication of a cell change execution mode. The indication of the cell change execution mode may indicate whether the cell change is performed through handover or redirection.

In addition, in another possible implementation, the UHI may alternatively include an indication of a type of a voice fallback procedure, to indicate that the voice fallback procedure is an EPS fallback for voice procedure or an inter-RAT fallback for voice procedure.

In still another possible implementation, the UHI may alternatively include a joint indication of a type of the voice fallback procedure and a cell change execution mode. For example, the joint indication may indicate one of the following: an EPS fallback for voice procedure performed through handover, an EPS fallback for voice procedure performed through redirection, an inter-RAT fallback for voice procedure performed through handover, and an inter-RAT fallback for voice procedure performed through redirection.

After receiving the handover preparation complete message, the 5GC 150 sends, to the source access network device 130, a handover command (not shown in the figure) for handover from the source cell 132 to the first target cell 112. After receiving the handover command, the source access network device 130 sends, to the terminal device 140, the handover command (not shown in the figure) for handover from the source cell 132 to the first target cell 112. In response to receiving the handover command, the terminal device 140 is handed over (430) from the source cell 132 to the first target cell 112, to set up a VoLTE service. An action 430 in the communication process 700 is similar to the action 430 in the communication process 400, and therefore is not described in detail again.

After a voice service ends, the first target access network device 110 determines (440) a target access network device (for example, the second target access network device 120) for a cell change. An action 440 in the communication process 700 is similar to the action 440 in the communication process 400, and therefore is not described in detail again.

Further, the first target access network device 110 sends (750), to the EPC 160, the handover request from the first target cell 112 of the first target access network device 110 to the second target cell 122 of the second target access network device 120, to request to quickly return the terminal device 140 to the second target cell 122. The handover request includes the cell change cause indication. After receiving (755) the handover request, the EPC 160 sends (760) the handover request to the 5GC 150. The handover request includes the UHI of the terminal device 140, and the UHI includes the cell change cause indication. Optionally, the EPC 160 may send context information of the terminal device 140 and the handover request together to the 5GC 150. After receiving (765) the handover request, the 5GC 150 sends (770) the handover request to the second target access network device 120, to notify the second target access network device 120 to prepare for handover. The handover request includes the UHI of the terminal device 140, and the UHI includes the cell change cause indication. After receiving (775) the handover request, the second target access network device 120 sends a handover preparation complete message (not shown in the figure) to the 5GC 150, and then the 5GC 150 forwards the handover preparation complete message (not shown in the figure) to the EPC 160.

After receiving the handover preparation complete message, the EPC 160 sends, to the first target access network device 110, a handover command (not shown in the figure) for handover from the first target cell 112 to the second target cell 122. After receiving the handover command, the first target access network device 110 sends, to the terminal device 140, the handover command (not shown in the figure) for the handover from the first target cell 112 to the second target cell 122. In response to receiving the handover command, the terminal device 140 is handed over from the first target cell 112 to the second target cell 122.

After the terminal device 140 is handed over to the second target cell 122, the second target access network device 120 determines (780), based on the cell change cause indication, that a first cell change and a second cell change are irrelevant to an inter-system ping-pong event. Therefore, the second target access network device 120 may not indicate the inter-system ping-pong event to the source access network device 130, to avoid triggering the source access network device 130 to adjust an inter-system handover parameter.

In another possible implementation, similar to the process 400, in the process 700, the second target access network device 120 may not perform the action 780, that is, does not determine, based on the cell change cause indication, that the first cell change and the second cell change are irrelevant to the inter-system ping-pong event. Alternatively, the second target access network device 120 may send the cell change cause indication to the source access network device 130 to which the source cell belongs. After receiving the cell change cause indication, the source access network device 130 may determine, based on the cell change cause indication, that the first cell change and the second cell change are irrelevant to the inter-system ping-pong event, and does not perform mobility parameter optimization.

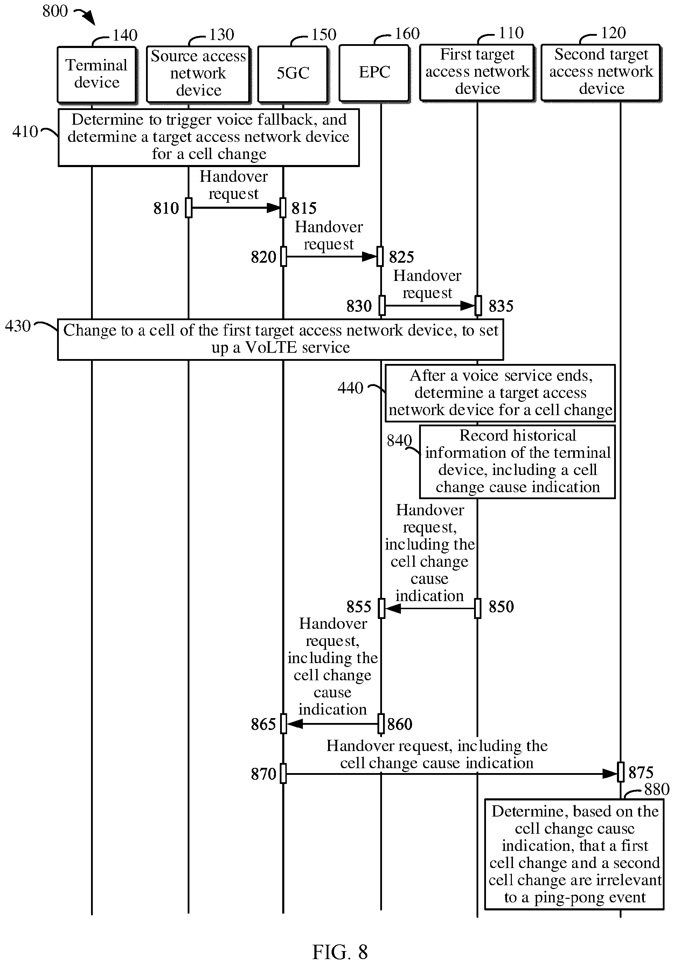

The foregoing describes, with reference to FIG. 7A and FIG. 7B, an implementation in which the source access network device 130 records the historical information of the terminal device 140 and the historical information includes the cell change cause indication. Alternatively, in another possible implementation, the first target access network device 110 may record the historical information of the terminal device 140, and the historical information includes the cell change cause indication. This is described with reference to FIG. 8.

FIG. 8 is a signaling interaction diagram of an example communication process 800 according to a possible implementation of this application. For purposes of description, the communication process 800 is described with reference to the various elements shown in FIG. 2B. The communication process 800 may be considered as another example implementation of the communication process 600.

In the communication process 800, the first target access network device 110 records the historical information of the terminal device 140, and the historical information includes the cell change cause indication. Further, after the terminal device 140 completes a voice service in the first target cell 112, the first target access network device 110 provides the cell change cause indication for the second target access network device 120 by using a handover request from the first target cell 112 to the second target cell 122.

Specifically, similar to the communication process 400, in the communication process 800, the terminal device 140 sets up an initial VoNR voice service or is in a VoNR voice service. An action 410 in the communication process 800 is similar to the action 410 in the communication process 400, and therefore is not described in detail again.

After determining (410) a target access network device (for example, the first target access network device 110) for a cell change, the source access network device 130 sends (810), to the 5GC 150, a handover request from the source cell 132 to the first target cell 112. Different from that in the communication process 700, UHI in the handover request from the source access network device 130 does not include the cell change cause indication. Further, the 5GC 150 sends (820) the handover request to the EPC 160. Subsequently, the EPC 160 sends (830) the handover request to the first target access network device 110, to notify the first target access network device 110 to prepare for handover. After receiving the handover request, the first target access network device 110 sends a handover preparation complete message (not shown in the figure) to the EPC 160, and then the EPC 160 forwards the handover preparation complete message (not shown in the figure) to the 5GC 150.

After receiving the handover preparation complete message, the 5GC 150 sends, to the source access network device 130, a handover command (not shown in the figure) for handover from the source cell 132 to the first target cell 112. After receiving the handover command, the source access network device 130 sends, to the terminal device 140, the handover command (not shown in the figure) for the handover from the source cell 132 to the first target cell 112. In response to receiving the handover command, the terminal device 140 is handed over (430) from the source cell 132 to the first target cell 112, to set up a VoLTE service. The action 430 in the communication process 800 is similar to the action 430 in the communication process 400, and therefore is not described in detail again.

After the voice service ends, the first target access network device 110 determines (440) a target access network device (for example, the second target access network device 120) for a cell change. The action 440 in the communication process 800 is similar to the action 440 in the communication process 400, and therefore is not described in detail again.

Further, the first target access network device 110 records (840) the historical information of the terminal device 140. The historical information includes the cell change cause indication. In a possible implementation, the first target access network device 110 may store the cell change cause indication in the UHI. For example, the first target access network device 110 may store the cell change cause indication and information about the first target cell 112 in an association manner, to indicate that a cause of the change of the terminal device 140 from the first target cell 112 is associated with a fast return procedure from the first target cell 112 to the second target cell 122.

Further, the first target access network device 110 sends (850), to the EPC 160, the handover request from the first target cell 112 of the first target access network device 110 to the second target cell 122 of the second target access network device 120, to request to quickly return the terminal device 140 to the second target cell 122. The handover request includes the cell change cause indication. After receiving (855) the handover request, the EPC 160 sends (860) the handover request to the 5GC 150. The handover request includes the cell change cause indication. Optionally, the EPC 160 may send context information of the terminal device 140 and the handover request together to the 5GC 150. After receiving (865) the handover request, the 5GC 150 sends (880) the handover request to the second target access network device 120, to notify the second target access network device 120 to prepare for handover. The handover request includes the cell change cause indication.

In a possible implementation, the first target access network device 110 may include the cell change cause indication in the UHI of the terminal device 140, and further include the UHI in the handover request from the first target cell 112 to the second target cell 122, to send the handover request to the second target access network device 120.

In another possible implementation, the first target access network device 110 may include the cell change cause indication in an information element or a field other than the UHI, and further include the information element or the field in the handover request from the first target cell 112 to the second target cell 122, to send the handover request to the second target access network device 120. For example, the information element or the field may be an information element dedicated to carrying the cell change cause indication, and the scope of this application is not limited in this aspect.

After receiving (875) the handover request, the second target access network device 120 sends a handover preparation complete message (not shown in the figure) to the 5GC 150, and then the 5GC 150 forwards the handover preparation complete message (not shown in the figure) to the EPC 160.

After receiving the handover preparation complete message, the EPC 160 sends, to the first target access network device 110, a handover command (not shown in the figure) for handover from the first target cell 112 to the second target cell 122. After receiving the handover command, the first target access network device 110 sends, to the terminal device 140, the handover command (not shown in the figure) for the handover from the first target cell 112 to the second target cell 122. In response to receiving the handover command, the terminal device 140 is handed over from the first target cell 112 to the second target cell 122.

After the terminal device 140 is handed over to the second target cell 122, the second target access network device 120 determines (880), based on the cell change cause indication, that a first cell change and a second cell change are irrelevant to an inter-system ping-pong event. Therefore, the second target access network device 120 may not indicate the inter-system ping-pong event to the source access network device 130, to avoid triggering the source access network device 130 to adjust an inter-system handover parameter.

In another possible implementation, similar to the process 400, in the process 800, the second target access network device 120 may not perform the action 880, that is, does not determine, based on the cell change cause indication, that the first cell change and the second cell change are irrelevant to the inter-system ping-pong event. Alternatively, the second target access network device 120 may send the cell change cause indication to the source access network device 130 to which the source cell belongs. After receiving the cell change cause indication, the source access network device 130 may determine, based on the cell change cause indication, that the first cell change and the second cell change are irrelevant to the inter-system ping-pong event, and does not perform mobility parameter optimization.

It should be understood that the communication processes 700 and 800 are described above with reference to the various elements shown in FIG. 2B. However, at least one of the communication processes 700 and 800 may alternatively be performed among a terminal device, an access network device, and a core network device in any other communication scenario. For example, at least one of the communication processes 700 and 800 may alternatively be performed among the terminal device, the access network device, and the core network device in the communication network 200A shown in FIG. 2A. In the implementation, a message exchanged between the first target access network device 110 and the second target access network device 120 may be forwarded only by using the 5GC 150.

It should be understood that mutual reference may be made between the foregoing described possible implementations of this application. Unless otherwise specified, same terms have same meanings.

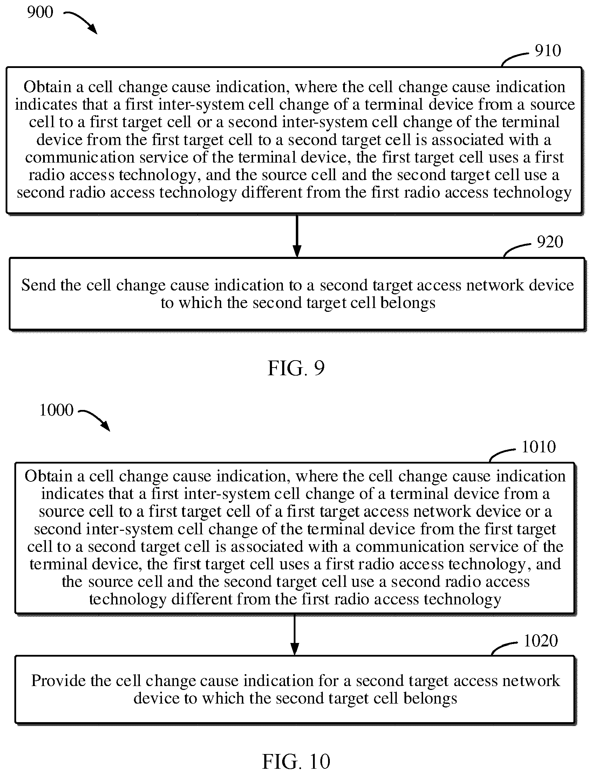

FIG. 9 is a flowchart of a communication method 900 according to a possible implementation of this application. In a possible implementation, the method 900 may be implemented by the terminal device 140 in the example communication network 100, 200A, or 200B, for example, may be implemented by a processor or a processing unit of the terminal device 140 in cooperation with another component (for example, a transceiver). In another possible implementation, the method 900 may alternatively be implemented by another communication apparatus independent of the example communication network 100, 200A, or 200B.

In block 910, the terminal device 140 obtains a cell change cause indication. The cell change cause indication indicates that a first cell change of the terminal device 140 from a source cell to a first target cell or a second cell change of the terminal device 140 from the first target cell to a second target cell is associated with a communication service of the terminal device 140. The first target cell uses a first RAT, and the source cell and the second target cell use a second RAT different from the first RAT.

In block 920, the terminal device 140 sends the cell change cause indication to a second target access network device to which the second target cell belongs. In this way, the second target access network device may distinguish a communication service procedure from an inter-system ping-pong event, to avoid invalid and redundant optimization of an inter-system handover parameter that is triggered by a normal communication service procedure of the terminal device 140.

In a possible implementation, that the terminal device 140 obtains a cell change cause indication includes: The terminal device 140 obtains the cell change cause indication from a source access network device to which the source cell belongs.

In a possible implementation, that the terminal device 140 obtains the cell change cause indication from a source access network device includes: The terminal device 140 receives, from the source access network device, a first cell change command associated with the first cell change, where the first cell change command includes the cell change cause indication. The cell change cause indication is sent to the terminal device 140 by using the first cell change command, so that additional signaling overheads can be avoided.

In a possible implementation, that the terminal device 140 obtains a cell change cause indication includes: The terminal device 140 obtains the cell change cause indication from a first target access network device to which the first target cell belongs.

In a possible implementation, that the terminal device 140 obtains the cell change cause indication from a first target access network device includes: The terminal device 140 receives, from the first target access network device, a second cell change command associated with the second cell change, where the second cell change command includes the cell change cause indication. The cell change cause indication is sent to the terminal device 140 by using the second cell change command, so that additional signaling overheads can be avoided.

In a possible implementation, that the terminal device 140 sends the cell change cause indication to a second target access network device includes: The terminal device 140 receives a request for historical information of the terminal device 140 from the second target access network device; and the terminal device 140 sends the historical information to the second target access network device, where the historical information includes the cell change cause indication. The cell change cause indication is sent to the second target access network device together with the historical information, so that additional signaling overheads can be avoided.

FIG. 10 is a flowchart of a communication method 1000 according to a possible implementation of this application. In a possible implementation, the method 1000 may be implemented by the first target access network device 110 in the example communication network 100, 200A, or 200B, for example, may be implemented by a processor or a processing unit of the first target access network device 110 in cooperation with another component (for example, a transceiver). In another possible implementation, the method 1000 may alternatively be implemented by another communication apparatus independent of the example communication network 100, 200A, or 200B.

In block 1010, the first target access network device 110 obtains a cell change cause indication. The cell change cause indication indicates that a first cell change of a terminal device from a source cell to a first target cell of the first target access network device 110 or a second cell change from the first target cell to a second target cell is associated with a communication service of the terminal device. The first target cell uses a first RAT, and the source cell and the second target cell use a second RAT different from the first RAT.

In block 1020, the first target access network device 110 provides the cell change cause indication for a second target access network device to which the second target cell belongs.

In a possible implementation, that the first target access network device 110 obtains a cell change cause indication includes: The first target access network device 110 obtains the cell change cause indication from a source access network device to which the source cell belongs.

In a possible implementation, that the first target access network device 110 obtains the cell change cause indication from a source access network device includes: The first target access network device 110 obtains historical information of the terminal device from the source access network device, where the historical information includes the cell change cause indication. The cell change cause indication is sent to the first target access network device 110 together with the historical information, so that additional signaling overheads can be avoided.

In a possible implementation, that the first target access network device 110 provides the cell change cause indication for a second target access network device 120 includes: The first target access network device 110 provides second historical information of the terminal device 140 for the second target access network device 120, where the second historical information includes the cell change cause indication, and the second historical information includes first historical information, and/or third historical information of the terminal device that is recorded by the first target access network device. The cell change cause indication is sent to the second target access network device together with the historical information, so that additional signaling overheads can be avoided.

In a possible implementation, that the first target access network device 110 provides the cell change cause indication for a second target access network device includes: The first target access network device 110 provides a handover request for the second cell change for the second target access network device, where the handover request includes the cell change cause indication. The cell change cause indication is sent to the second target access network device together with the handover request, so that additional signaling overheads can be avoided.

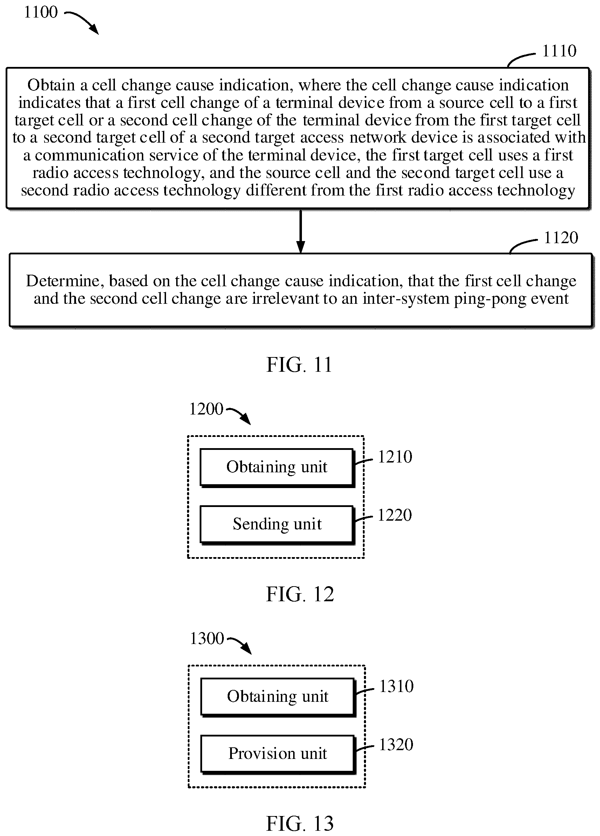

FIG. 11 is a flowchart of a communication method 1100 according to a possible implementation of this application. In a possible implementation, the method 1100 may be implemented by the second target access network device 120 in the example communication network 100, 200A, or 200B, for example, may be implemented by a processor or a processing unit of the second target access network device 120 in cooperation with another component (for example, a transceiver). In another possible implementation, the method 1100 may alternatively be implemented by another communication apparatus independent of the example communication network 100, 200A, or 200B.

In block 1110, the second target access network device 120 obtains a cell change cause indication. The cell change cause indication indicates that a first cell change of a terminal device from a source cell to a first target cell or a second cell change of the terminal device from the first target cell to a second target cell of the second target access network device 120 is associated with a communication service of the terminal device. The first target cell uses a first RAT, and the source cell and the second target cell use a second RAT different from the first RAT.

In block 1120, the second target access network device 120 determines, based on the cell change cause indication, that the first cell change and the second cell change are irrelevant to an inter-system ping-pong event. In this way, the second target access network device 120 may distinguish a communication service procedure from the inter-system ping-pong event, to avoid invalid and redundant optimization of an inter-system handover parameter that is triggered by a normal communication service procedure of the terminal device.

In a possible implementation, that the second target access network device 120 obtains a cell change cause indication includes: obtaining the cell change cause indication from the terminal device.

In a possible implementation, that the second target access network device 120 obtains the cell change cause indication from the terminal device includes: sending a request for historical information of the terminal device to the terminal device; and receiving the historical information from the terminal device, where the historical information includes the cell change cause indication. The cell change cause indication is sent to the second target access network device 120 together with the historical information, so that additional signaling overheads can be avoided.

In a possible implementation, the obtaining a cell change cause indication includes: obtaining the cell change cause indication from a source access network device to which the source cell belongs.

In a possible implementation, the obtaining the cell change cause indication from a source access network device includes: obtaining historical information of the terminal device from the source access network device, where the historical information includes the cell change cause indication. The cell change cause indication is sent to the second target access network device 120 together with the historical information, so that additional signaling overheads can be avoided.

In a possible implementation, the obtaining a cell change cause indication includes: obtaining the cell change cause indication from a first target access network device to which the first target cell belongs.

In a possible implementation, the obtaining the cell change cause indication from a first target access network device includes: obtaining second historical information of the terminal device from the first target access network device, where the second historical information includes the cell change cause indication, and the second historical information includes first historical information of the terminal device that is obtained by the first target access network device from the source access network device to which the source cell belongs, and/or third historical information of the terminal device that is recorded by the first target access network device. The cell change cause indication is sent to the second target access network device 120 together with the historical information, so that additional signaling overheads can be avoided.

In a possible implementation of the method 900, 1000, or 1100, the cell change cause indication includes: a cause of the change of the terminal device from the source cell or the first target cell; and/or a cause of the change of the terminal device to the first target cell or the second target cell.

In a possible implementation of the method 900, 1000, or 1100, the cell change cause indication indicates at least one of the following: The first cell change is associated with a voice fallback procedure of the terminal device from the source cell to the first target cell; and the second cell change is associated with a fast return procedure of the terminal device from the first target cell to the second target cell. In this way, invalid and redundant optimization of an inter-system handover parameter that is triggered by a voice service procedure of the terminal device is avoided.

In a possible implementation of the method 900, 1000, or 1100, the voice fallback procedure includes a normal call voice fallback procedure or an emergency call voice fallback procedure, and the fast return procedure includes a normal call voice fast return procedure or an emergency call voice fast return procedure.

In a possible implementation of the method 900, 1000, or 1100, the first RAT is one of a 2G RAT, a 3G RAT, and a 4G RAT, and the second RAT is a 5G RAT.

By using the method 900, 1000, or 1100, the invalid and redundant inter-system handover parameter optimization can be avoided, system resources can be saved, and communication efficiency can be improved.

Details of the possible implementations of this application described above with reference to FIG. 1 to FIG. 8 are also applicable to the methods 900, 1000, and 1100. Therefore, details are not described again.

FIG. 12 is a block diagram of a communication apparatus 1200 according to a possible implementation of this application. The communication apparatus 1200 may be implemented as a device or a chip in the device. The scope of this application is not limited in this aspect. The communication apparatus 1200 may include a plurality of modules, configured to perform corresponding steps in the method 900 discussed in FIG. 9. The communication apparatus 1200 may be implemented as the terminal device 140 shown in FIG. 1, FIG. 2A, or FIG. 2B or a part of the terminal device 140.

As shown in FIG. 12, the communication apparatus 1200 includes an obtaining unit 1210 and a sending unit 1220. The obtaining unit 1210 is configured to obtain a cell change cause indication. The cell change cause indication indicates that a first cell change of the terminal device from a source cell to a first target cell or a second cell change of the terminal device from the first target cell to a second target cell is associated with a communication service of the terminal device, the first target cell uses a first RAT, and the source cell and the second target cell use a second RAT different from the first RAT. The sending unit 1220 is configured to send the cell change cause indication to a second target access network device to which the second target cell belongs.

In a possible implementation, the obtaining unit 1210 is configured to obtain the cell change cause indication from a source access network device to which the source cell belongs.

In a possible implementation, the obtaining unit 1210 is configured to receive, from the source access network device, a first cell change command associated with the first cell change, where the first cell change command includes the cell change cause indication. The cell change cause indication is sent to the communication apparatus 1200 by using the first cell change command, so that additional signaling overheads can be avoided.

In a possible implementation, the obtaining unit 1210 is configured to obtain the cell change cause indication from a first target access network device to which the first target cell belongs.

In a possible implementation, the obtaining unit 1210 is configured to receive, from the first target access network device, a second cell change command associated with the second cell change, where the second cell change command includes the cell change cause indication. The cell change cause indication is sent to the communication apparatus 1200 by using the second cell change command, so that additional signaling overheads can be avoided.

In a possible implementation, the communication apparatus 1200 further includes a receiving unit. The receiving unit is configured to receive, from the second target access network device, a request for historical information of the communication apparatus 1200. The sending unit 1220 is configured to send the historical information to the second target access network device, where the historical information includes the cell change cause indication. The cell change cause indication is sent to the second target access network device together with the historical information, so that additional signaling overheads can be avoided.

FIG. 13 is a block diagram of an access network device 1300 according to a possible implementation of this application. The access network device 1300 may be implemented as a device or a chip in the device. The scope of this application is not limited in this aspect. The access network device 1300 may include a plurality of modules, configured to perform corresponding steps in the method 1000 discussed in FIG. 10. The access network device 1300 may be implemented as the first target access network device 110 shown in FIG. 1, FIG. 2A, or FIG. 2B or a part of the first target access network device 110.

As shown in FIG. 13, the access network device 1300 includes an obtaining unit 1310 and a provision unit 1320. The obtaining unit 1310 is configured to obtain a cell change cause indication, where the cell change cause indication indicates that a first cell change of a terminal device from a source cell to a first target cell of the access network device 1300 or a second cell change from the first target cell to a second target cell is associated with a communication service of the terminal device, the first target cell uses a first RAT, and the source cell and the second target cell use a second RAT different from the first RAT. The provision unit 1320 is configured to provide the cell change cause indication for a second target access network device to which the second target cell belongs.

In a possible implementation, the obtaining unit 1310 is configured to obtain the cell change cause indication from a source access network device to which the source cell belongs.

In a possible implementation, the obtaining unit 1310 is configured to obtain historical information of the terminal device from the source access network device, where the historical information includes the cell change cause indication. The cell change cause indication is sent to the access network device 1300 together with the historical information, so that additional signaling overheads can be avoided.

In a possible implementation, the provision unit 1320 is configured to provide the historical information of the terminal device for the second target access network device, where the historical information includes the cell change cause indication. The cell change cause indication is sent to the second target access network device together with the historical information, so that additional signaling overheads can be avoided.

In a possible implementation, the provision unit 1320 is configured to provide a handover request for the second cell change for the second target access network device, where the handover request includes the cell change cause indication. The cell change cause indication is sent to the second target access network device together with the handover request, so that additional signaling overheads can be avoided.

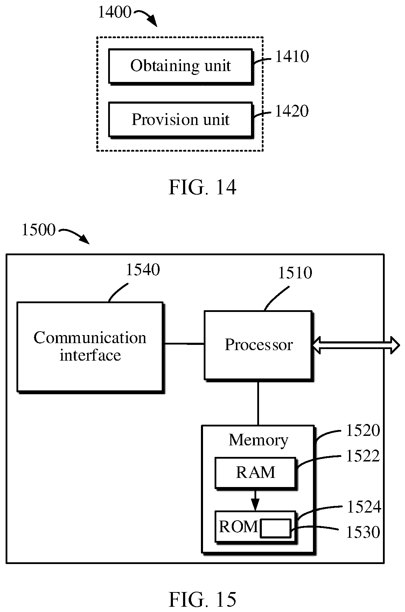

FIG. 14 is a block diagram of an access network device 1400 according to a possible implementation of this application. The access network device 1400 may be implemented as a device or a chip in the device. The scope of this application is not limited in this aspect. The access network device 1400 may include a plurality of modules, configured to perform corresponding steps in the method 1100 discussed in FIG. 11. The access network device 1400 may be implemented as the second target access network device 120 shown in FIG. 1, FIG. 2A, or FIG. 2B or a part of the second target access network device 120.

As shown in FIG. 14, the access network device 1400 includes an obtaining unit 1410 and a provision unit 1420. The obtaining unit 1410 is configured to obtain a cell change cause indication, where the cell change cause indication indicates that a first cell change of a terminal device from a source cell to a first target cell or a second cell change of the terminal device from the first target cell to a second target cell of the access network device 1400 is associated with a communication service of the terminal device, the first target cell uses a first RAT, and the source cell and the second target cell use a second RAT different from the first RAT. The provision unit 1420 is configured to determine, based on the cell change cause indication, that the first cell change and the second cell change are irrelevant to an inter-system ping-pong event.

In a possible implementation, the cell change cause indication indicates at least one of the following: The first cell change is associated with a voice fallback procedure of the terminal device from the source cell to the first target cell; and the second cell change is associated with a fast return procedure of the terminal device from the first target cell to the second target cell. In this way, invalid and redundant optimization of an inter-system handover parameter that is triggered by the voice service procedure of the terminal device is avoided.

In a possible implementation, the obtaining unit 1410 is configured to obtain the cell change cause indication from the terminal device.

In a possible implementation, the obtaining unit 1410 is configured to: send a request for historical information of the terminal device to the terminal device; and receive the historical information from the terminal device, where the historical information includes the cell change cause indication. The cell change cause indication is sent to the access network device 1400 together with the historical information, so that additional signaling overheads can be avoided.

In a possible implementation, the obtaining unit 1410 is configured to obtain the cell change cause indication from a source access network device to which the source cell belongs.

In a possible implementation, the obtaining unit 1410 is configured to obtain the historical information of the terminal device from the source access network device, where the historical information includes the cell change cause indication. The cell change cause indication is sent to the access network device 1400 together with the historical information, so that additional signaling overheads can be avoided.

In a possible implementation, the obtaining unit 1410 is configured to obtain the cell change cause indication from a first target access network device to which the first target cell belongs.

In a possible implementation, the obtaining unit 1410 is configured to obtain the historical information of the terminal device from the first target access network device, where the historical information includes the cell change cause indication. The cell change cause indication is sent to the access network device 1400 together with the historical information, so that additional signaling overheads can be avoided.

In a possible implementation of the communication apparatus 1200, the access network device 1300, or the access network device 1400, the cell change cause indication includes: a cause of the change of the terminal device from the source cell or the first target cell; and/or a cause of the change of the terminal device to the first target cell or the second target cell.

In a possible implementation of the communication apparatus 1200, the access network device 1300, or the access network device 1400, the cell change cause indication indicates at least one of the following: The first cell change is associated with a voice fallback procedure of the terminal device from the source cell to the first target cell; and the second cell change is associated with a fast return procedure of the terminal device from the first target cell to the second target cell. In this way, invalid and redundant optimization of an inter-system handover parameter that is triggered by the voice service procedure of the terminal device is avoided.

In a possible implementation of the communication apparatus 1200, the access network device 1300, or the access network device 1400, the voice fallback procedure includes a normal call voice fallback procedure or an emergency call voice fallback procedure. For example, the communication apparatus falls back from a 5G cell to an LTE cell through handover or redirection, to initiate a voice service. The fast return procedure includes a normal call voice fast return procedure or an emergency call voice fast return procedure. For example, after a voice service ends, the communication apparatus returns from an LTE cell to a 5G cell through handover or redirection.

In a possible implementation of the communication apparatus 1200, the access network device 1300, or the access network device 1400, the first RAT is one of a 2G RAT, a 3G RAT, and a 4G RAT, and the second RAT is a 5G RAT.

Details of the possible implementations of this application described above with reference to FIG. 1 to FIG. 11 are also applicable to the communication apparatus 1200, the access network device 1300, and the access network device 1400. Therefore, details are not described again.

FIG. 15 is a simplified block diagram of an example device 1500 suitable for implementing a possible implementation of this application. The device 1500 may be configured to implement the terminal device 140, the first target access network device 110, or the second target access network device 120 shown in FIG. 1, FIG. 2A, or FIG. 2B. As shown in the figure, the device 1500 includes one or more processors (or processing units) 1510, may further include one or more memories 1520 coupled to the processor 1510, and may further include a communication interface 1540 coupled to the processor 1510.

The communication interface 1540 may be configured to communicate with another device or apparatus, for example, send or receive data and/or a signal. The communication interface 1540 may have at least one communication interface for communication. The communication interface may include any interface necessary for communicating with another device. For example, the communication interface may be a transceiver, a circuit, a bus, a module, or a communication interface of another type.

The processor 1510 may include but is not limited to at least one of the following: a general-purpose computer, a dedicated computer, a microcontroller, a digital signal processor (Digital Signal Processor, DSP), or a controller-based multi-core controller architecture. The device 1500 may have a plurality of processors, such as application-specific integrated circuit chips, which temporally belong to a clock synchronized with a main processor.

The memory 1520 may include one or more nonvolatile memories and one or more volatile memories. An example of the nonvolatile memory includes but is not limited to at least one of the following: a read-only memory (Read-Only Memory, ROM) 1524, an erasable programmable read-only memory (Erasable Programmable Read-Only Memory, EPROM), a flash memory, a hard disk, a compact disc (Compact Disc, CD), a digital video disc (Digital Video Disc, DVD), or another magnetic storage and/or optical storage. An example of the volatile memory includes but is not limited to at least one of the following: a random access memory (Random Access Memory, RAM) 1522, or another volatile memory that does not last for power-off duration.

A computer program 1530 includes computer-executable instructions executed by the associated processor 1510. The program 1530 may be stored in the ROM 1524. The processor 1510 may perform any proper action and processing by loading the program 1530 into the RAM 1522.

Possible implementations of this application may be implemented by using the program 1530, so that the device 1500 may perform any of the processes discussed with reference to FIG. 2A and FIG. 2B to FIG. 11. The possible implementations of this application may alternatively be implemented by using hardware or a combination of software and hardware.

In some implementations, the program 1530 may be tangibly included in a computer-readable medium, and the computer-readable medium may be included in the device 1500 (for example, in the memory 1520) or another storage device that can be accessed by the device 1500. The program 1530 may be loaded from the computer-readable medium into the RAM 1522 for execution. The computer-readable medium may include any type of tangible nonvolatile memory, for example, a ROM, an EPROM, a flash memory, a hard disk, a CD, or a DVD.

This application further provides a communication system. The communication system includes the communication apparatus 1200, the access network device 1300, and the access network device 1400 described above.

Usually, various possible implementations of this application may be implemented by hardware or a dedicated circuit, software, logic, or any combination thereof. Some aspects may be implemented by hardware, and other aspects may be implemented by firmware or software, and may be performed by a controller, a microprocessor, or another computing device. Although various aspects of the possible implementations of this application are shown and described as block diagrams, flowcharts, or some other figures, it should be understood that the blocks, apparatuses, systems, technologies, or methods described in this specification may be implemented as, for example, non-limiting examples, hardware, software, firmware, dedicated circuits or logic, general-purpose hardware, controllers, other computing devices, or a combination thereof.

This application further provides at least one computer program product tangibly stored on a non-transitory computer-readable storage medium. The computer program product includes computer-executable instructions, such as instructions included in a program module, which are executed in a device on a target real or virtual processor to perform the processes/methods as described above with reference to FIG. 2A and FIG. 2B to FIG. 11. Usually, the program module includes a routine, a program, a library, an object, a class, a component, a data structure, or the like that executes a specific task or implements a specific abstract data type. In various possible implementations, functions of the program modules may be combined or split between the program modules as required. Machine-executable instructions used for the program module may be executed locally or in a distributed device. In the distributed device, the program module may be locally located and located in a remote storage medium.

Program code for implementing the method of this application may be written in any combination of one or more programming languages. The program code may be provided for a processor or a controller of a general-purpose computer, a dedicated computer, or another programmable data processing apparatus, so that when the program code is executed by the processor or controller, functions/operations specified in the flowcharts and/or the block diagrams are implemented. The program code may be executed entirely on a machine, executed partially on a machine, executed partially on a machine as an independent software package and executed partially on a remote machine, or executed entirely on a remote machine or server.

In the context of this application, a machine-readable medium may be a tangible medium, and may include or store a program for use by or use in combination with an instruction execution system, an apparatus, or a device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination of the foregoing content. A more specific example of the machine-readable storage medium includes an electrical connection based on one or more lines, a portable computer disk, a hard disk, a random access memory (RAM), a read-only memory (ROM), an erasable programmable read-only memory (EPROM or flash memory), an optical fiber, a compact disc read-only memory (CD-ROM), an optical storage device, a magnetic storage device, or any appropriate combination of the foregoing content.

In addition, although operations are described in a particular order, it should be understood as that it is required that the operations are performed in the shown particular order or in sequence, or it is required that all operations shown in the figures should be performed to achieve an expected result. In a specific environment, multi-task and parallel processing may be advantageous. Similarly, although several specific implementation details are included in the foregoing descriptions, these should not be construed as limiting the scope of this application. Some features described in the context of separate possible implementations may alternatively be implemented in combination in a single implementation. On the contrary, various features described in the context of a single implementation may alternatively be implemented in a plurality of implementations separately or in any suitable sub-combination.

Although the subject matter has been described in language specific to structural features and/or method logic actions, it should be understood that the subject matter defined in the appended claims is not necessarily limited to the particular features or actions described above. Rather, the specific features and actions described above are merely example forms of implementing the claims.

## Claims

1. A communication method, wherein the method is applied to a terminal device, and the method comprises:
obtaining a cell change cause indication, wherein the cell change cause indication indicates that a first cell change of the terminal device from a source cell to a first target cell or a second cell change of the terminal device from the first target cell to a second target cell is associated with a communication service of the terminal device, the first target cell uses a first radio access technology, and the source cell and the second target cell use a second radio access technology different from the first radio access technology; and
sending the cell change cause indication to a second target access network device to which the second target cell belongs.

2. The method according to claim 1, wherein the cell change cause indication comprises:
a cause of the change of the terminal device from the source cell or the first target cell; and/or
a cause of the change of the terminal device to the first target cell or the second target cell.

3. The method according to claim 1 or 2, wherein the cell change cause indication indicates at least one of the following:
the first cell change is associated with a voice fallback procedure of the terminal device from the source cell to the first target cell; and
the second cell change is associated with a fast return procedure of the terminal device from the first target cell to the second target cell.

4. The method according to claim 1, further comprising:
obtaining at least one of the following:
an indication of a type of a voice fallback procedure, wherein the indication of the type of the voice fallback procedure indicates that the voice fallback procedure is an evolved packet system fallback for voice procedure or an inter-radio access technology fallback for voice procedure; and
an indication of a cell change execution mode, wherein the cell change execution mode comprises handover or redirection.

5. The method according to claim 3, wherein the voice fallback procedure comprises a normal call voice fallback procedure or an emergency call voice fallback procedure, and the fast return procedure comprises a normal call voice fast return procedure or an emergency call voice fast return procedure.

6. The method according to claim 1, wherein the obtaining a cell change cause indication comprises:
obtaining the cell change cause indication from a source access network device to which the source cell belongs.

7. The method according to claim 6, wherein the obtaining the cell change cause indication from a source access network device comprises:
receiving, from the source access network device, a first handover command associated with the first cell change, wherein the first handover command comprises the cell change cause indication.

8. The method according to claim 1, wherein the obtaining a cell change cause indication comprises:
obtaining the cell change cause indication from a first target access network device to which the first target cell belongs.

9. The method according to claim 8, wherein the obtaining the cell change cause indication from a first target access network device comprises:
receiving, from the first target access network device, a second handover command associated with the second cell change, wherein the second handover command comprises the cell change cause indication.

10. The method according to claim 1, wherein the sending the cell change cause indication to a second target access network device comprises:
sending a radio resource control reconfiguration complete message to the second target access network device in response to receiving, from a first target access network device to which the first target cell belongs, a second handover command associated with the second cell change, wherein the radio resource control reconfiguration complete message comprises the cell change cause indication.

11. The method according to claim 1, wherein the sending the cell change cause indication to a second target access network device comprises:
receiving a request for historical information of the terminal device from the second target access network device; and
sending the historical information to the second target access network device, wherein the historical information comprises the cell change cause indication.

12. A communication method, wherein the method is applied to a first target access network device, and the method comprises:
obtaining a cell change cause indication, wherein the cell change cause indication indicates that a first cell change of a terminal device from a source cell to a first target cell of the first target access network device or a second cell change of the terminal device from the first target cell to a second target cell is associated with a communication service of the terminal device, the first target cell uses a first radio access technology, and the source cell and the second target cell use a second radio access technology different from the first radio access technology; and
providing the cell change cause indication for a second target access network device to which the second target cell belongs.

13. The method according to claim 12, wherein the cell change cause indication comprises:
a cause of the change of the terminal device from the source cell or the first target cell; and/or
a cause of the change of the terminal device to the first target cell or the second target cell.

14. The method according to claim 12 or 13, wherein the cell change cause indication indicates at least one of the following:
the first cell change is associated with a voice fallback procedure of the terminal device from the source cell to the first target cell; and
the second cell change is associated with a fast return procedure of the terminal device from the first target cell to the second target cell.

15. The method according to claim 12, further comprising:
obtaining at least one of the following:
an indication of a type of a voice fallback procedure, wherein the indication of the type of the voice fallback procedure indicates that the voice fallback procedure is an evolved packet system fallback for voice procedure or an inter-radio access technology fallback for voice procedure; and
an indication of a cell change execution mode, wherein the cell change execution mode comprises handover or redirection.

16. The method according to claim 14, wherein the voice fallback procedure comprises a normal call voice fallback procedure or an emergency call voice fallback procedure, and the fast return procedure comprises a normal call voice fast return procedure or an emergency call voice fast return procedure.

17. The method according to claim 12, wherein the obtaining a cell change cause indication comprises:
obtaining the cell change cause indication from a source access network device to which the source cell belongs.

18. The method according to claim 17, wherein the obtaining the cell change cause indication from a source access network device comprises:
obtaining first historical information of the terminal device from the source access network device, wherein the first historical information comprises the cell change cause indication.

19. The method according to claim 12, wherein the providing the cell change cause indication for a second target access network device comprises:
providing second historical information of the terminal device for the second target access network device, wherein the second historical information comprises the cell change cause indication, and the second historical information comprises the first historical information, and/or third historical information of the terminal device that is recorded by the first target access network device.

20. The method according to claim 12, wherein the providing the cell change cause indication for a second target access network device comprises:
sending a handover request for the second cell change to the second target access network device, wherein the handover request comprises the cell change cause indication.

21. A communication method, wherein the method is applied to a second target access network device, and the method comprises:
obtaining a cell change cause indication, wherein the cell change cause indication indicates that a first cell change of a terminal device from a source cell to a first target cell or a second cell change of the terminal device from the first target cell to a second target cell of the second target access network device is associated with a communication service of the terminal device, the first target cell uses a first radio access technology, and the source cell and the second target cell use a second radio access technology different from the first radio access technology; and
sending the cell change cause indication to a source access network device to which the source cell belongs.

22. The method according to claim 21, wherein the cell change cause indication comprises:
a cause of the change of the terminal device from the source cell or the first target cell; and/or
a cause of the change of the terminal device to the first target cell or the second target cell.

23. The method according to claim 21 or 22, wherein the cell change cause indication indicates at least one of the following:
the first cell change is associated with a voice fallback procedure of the terminal device from the source cell to the first target cell; or
the second cell change is associated with a fast return procedure of the terminal device from the first target cell to the second target cell.

24. The method according to claim 21, further comprising:
obtaining at least one of the following:
an indication of a type of a voice fallback procedure, wherein the indication of the type of the voice fallback procedure indicates that the voice fallback procedure is an evolved packet system fallback for voice procedure or an inter-radio access technology fallback for voice procedure; and
an indication of a cell change execution mode, wherein the cell change execution mode comprises handover or redirection.

25. The method according to claim 23, wherein the voice fallback procedure comprises a normal call voice fallback procedure or an emergency call voice fallback procedure, and the fast return procedure comprises a normal call voice fast return procedure or an emergency call voice fast return procedure.

26. The method according to claim 21, wherein the obtaining a cell change cause indication comprises:
obtaining the cell change cause indication from the terminal device.

27. The method according to claim 26, wherein the obtaining the cell change cause indication from the terminal device comprises:
receiving a radio resource control reconfiguration complete message from the terminal device, wherein the radio resource control reconfiguration complete message comprises the cell change cause indication.

28. The method according to claim 26, wherein the obtaining the cell change cause indication from the terminal device comprises:
sending a request for historical information of the terminal device to the terminal device; and
receiving the historical information from the terminal device, wherein the historical information comprises the cell change cause indication.

29. The method according to claim 21, wherein the obtaining a cell change cause indication comprises:
obtaining the cell change cause indication from a first target access network device to which the first target cell belongs.

30. The method according to claim 29, wherein the obtaining the cell change cause indication from a first target access network device comprises:
obtaining second historical information of the terminal device from the first target access network device, wherein the second historical information comprises the cell change cause indication, and the second historical information comprises first historical information of the terminal device that is obtained by the first target access network device from the source access network device to which the source cell belongs, and/or third historical information of the terminal device that is recorded by the first target access network device.

31. The method according to claim 29, wherein the obtaining the cell change cause indication from a first target access network device comprises:
receiving a cell change request for the second cell change from the first target access network device, wherein the cell change request comprises the cell change cause indication.

32. A communication method, wherein the method is applied to a source access network device, and the method comprises:
obtaining a cell change cause indication, wherein the cell change cause indication indicates that a first cell change or a second cell change is associated with a communication service of a terminal device, wherein the first cell change comprises change of the terminal device from a source cell provided by the source access network device to a first target cell, the second cell change comprises change of the terminal device from the first target cell to a second target cell, the first target cell uses a first radio access technology, and the source cell and the second target cell use a second radio access technology; and
determining, based on the cell change cause indication, that the first cell change and the second cell change are irrelevant to an inter-system ping-pong event.

33. The method according to claim 32, wherein the obtaining a cell change cause indication comprises:
receiving an inter-system ping-pong event report from a second target access network device to which the second target cell belongs, wherein the inter-system ping-pong event report comprises the cell change cause indication.

34. The method according to claim 32, wherein the cell change cause indication indicates at least one of the following:
the first cell change is associated with a voice fallback procedure of the terminal device from the source cell to the first target cell; and
the second cell change is associated with a fast return procedure of the terminal device from the first target cell to the second target cell.

35. The method according to claim 32, further comprising:
obtaining at least one of the following:
an indication of a type of a voice fallback procedure, wherein the indication of the type of the voice fallback procedure indicates that the voice fallback procedure is an evolved packet system fallback for voice procedure or an inter-radio access technology fallback for voice procedure; and
an indication of a cell change execution mode, wherein the cell change execution mode comprises handover or redirection.

36. A communication apparatus, comprising a unit configured to perform the method according to any one of claims 1 to 11.

37. A communication apparatus, comprising a unit configured to perform the method according to any one of claims 12 to 20.

38. A communication apparatus, comprising a unit configured to perform the method according to any one of claims 21 to 31.

39. A communication apparatus, comprising a unit configured to perform the method according to any one of claims 32 to 35.

40. A communication apparatus, comprising:
at least one processor, wherein the at least one processor is configured to execute instructions stored in at least one memory, and when the instructions are executed by the at least one processor, the communication apparatus is enabled to implement the method according to any one of claims 1 to 11, 12 to 20, 21 to 31, and 32 to 35.

41. A computer-readable storage medium, wherein the computer-readable storage medium stores a computer program, and when the computer program is executed by a processor, the method according to any one of claims 1 to 11, 12 to 20, 21 to 31, and 32 to 35 is implemented.

42. A chip, configured to perform the method according to any one of claims 1 to 11, 12 to 20, 21 to 31, and 32 to 35.

43. A computer program product, wherein the computer program product is tangibly stored in a computer-readable medium and comprises computer-executable instructions, and when the computer-executable instructions are executed, a device is enabled to implement the method according to any one of claims 1 to 11, 12 to 20, 21 to 31, and 32 to 35.

44. A communication system, wherein the communication system comprises a first access network device and a second access network device, wherein
the first access network device is configured to perform the method according to any one of claims 12 to 20; or
the second access network device is configured to perform the method according to any one of claims 21 to 31.

45. The communication system according to claim 44, wherein the communication system further comprises a terminal device, and the terminal device is configured to perform the method according to any one of claims 1 to 11.
